(19) **Europäisches Patentamt** / **European Patent Office** / **Office européen des brevets**

(11) **EP 4 657 356 A1**

(12) **EUROPEAN PATENT APPLICATION**
published in accordance with Art. 153(4) EPC

(43) Date of publication:
**03.12.2025 Bulletin 2025/49**

(21) Application number: **23932919.6**

(22) Date of filing: **10.04.2023**

(51) International Patent Classification (IPC):
**G06Q 50/00** (2024.01)  **G06N 20/00** (2019.01)

(52) Cooperative Patent Classification (CPC):
**G06N 20/00**

(86) International application number:
**PCT/JP2023/014533**

(87) International publication number:
**WO 2024/214137 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mitsubishi Electric Corporation Tokyo 100-8310 (JP)**

(72) Inventor: **NORIMATSU, Yoshiyuki Tokyo 100-8310 (JP)**

(74) Representative: **Pfenning, Meinig & Partner mbB Patent- und Rechtsanwälte Theresienhöhe 11a 80339 München (DE)**

(54) **INFORMATION PROCESSING DEVICE, PROGRAM, AND INFORMATION PROCESSING METHOD**

(57) An estimation device (100) includes an input unit (110) that generates supervised data including causal variables, process types, and outcome variable for each of multiple processes, and a training unit (120) that uses the supervised data to generate a learning model by learning the outcome variables from the causal variables and the process types for each of the processes.

FIG. 2

EP 4 657 356 A1

**Description**

**TECHNICAL FIELD**

The disclosure relates to an information processing device, a program, and an information processing method.

**BACKGROUND ART**

Various techniques are known for estimating an individual process effect, which is an effect of a certain process. An example of conventional techniques for estimating an individual process effect is a method of estimating an individual process effect at a single time point by using a multitask Gaussian process, as described in NPL 1.

**PRIOR ART REFERENCE**

**PATENT REFERENCE**

Non-patent Literature 1: Alaa, A. M. & van der Schaar, M. "Bayesian inference of individualized treatment effects using multi-task gaussian processes," In Advances in Neural Information Processing Systems, pp. 3424-3432, 2017.

**SUMMARY OF THE INVENTION**

**PROBLEM TO BE SOLVED BY THE INVENTION**

In NPL 1, only the individual process effects are known when there is one type of process at a single time point and when there is no such process, and the degree of process quantity cannot be considered. Therefore, when there are multiple process types, it is not known which process should be performed in what quantity to achieve the highest individual process effect.
Therefore, it is an object of one or more aspects of the disclosure to make it possible to learn the process effects of multiple processes.

**MEANS OF SOLVING THE PROBLEM**

An information processing device according to a first aspect of the disclosure includes: an input unit configured to generate supervised data including causal variables, processing types, and outcome variables for each of a plurality of processes; and a training unit configured to generate a learning model by using the supervised data to learn the outcome variables from the causal variables and the process types for each of the processes.
An information processing device according to a second aspect of the disclosure includes: an input unit configured to generate, for each of the processes, supervised data including first causal variables that change with time, second causal variables that do not change with time, process types, and history information indicating a history of changes with time of the first causal variables; and a training unit configured to generate a learning model by using the supervised data to learn, for each of the processes, a change with time of the first causal variables at a second time from the first causal variables, the second causal variables, and the process types at a first time in accordance with the history information.
An information processing device according to a third aspect of the disclosure includes: an estimating unit configured to estimate outcome variables by using supervised data including causal variables, process types, and the outcome variables for each of a plurality of processes and inputting the causal variables and the process types into a learning model generated by learning the outcome variables from the causal variables and the process types for each of the processes; and an output unit configured to output a result of the estimation.
An information processing device according to a fourth aspect of the disclosure includes: an estimating unit configured to estimate a change with time of first causal variables obtained from a combination of two or more processes selected from a plurality of processes during a certain time period, by using a learning model generated by using supervised data including history information indicating a history of change with time of the first causal variables that change with time, second causal variables that do not change with time, process types, and the first causal variables, for each of the processes, and by learning, for each of the processes, the change with time of the first causal variables at a second time from the first causal variables, the second causal variables, and the process types at a first time in accordance with the history information; and an output unit configured to output a result of the estimation.
A program according to the first aspect of the disclosure causes a computer to function as: an input unit configured to generate supervised data including causal variables, processing types, and outcome variables for each of a plurality of processes; and a training unit configured to generate a learning model by using the supervised data to learn the outcome variables from the causal variables and the process types for each of the processes.

A program according to the second aspect of the disclosure causes a computer to function as: an input unit configured to generate, for each of the processes, supervised data including first causal variables that change with time, second causal variables that do not change with time, process types, and history information indicating a history of changes with time of the first causal variables; and a training unit configured to generate a learning model by using the supervised data to learn, for each of the processes, a change with time of the first causal variables at a second time from the first causal variables, the second causal variables, and the process types at a first time in accordance with the history information.

A program according to the third aspect of the disclosure causes a computer to function as: an estimating unit configured to estimate outcome variables by using supervised data including causal variables, process types, and the outcome variables for each of a plurality of processes and inputting the causal variables and the process types into a learning model generated by learning the outcome variables from the causal variables and the process types for each of the processes; and an output unit configured to output a result of the estimation.

A program according to the fourth aspect of the disclosure causes a computer to function as: an estimating unit configured to estimate a change with time of first causal variables obtained from a combination of two or more processes selected from a plurality of processes during a certain time period, by using a learning model generated by using supervised data including history information indicating a history of change with time of the first causal variables that change with time, second causal variables that do not change with time, process types, and the first causal variables, for each of the processes, and by learning, for each of the processes, the change with time of the first causal variables at a second time from the first causal variables, the second causal variables, and the process types at a first time in accordance with the history information; and an output unit configured to output a result of the estimation.

An information processing method according to the first aspect of the disclosure includes: generating supervised data including causal variables, processing types, and outcome variables for each of a plurality of processes; and generating a learning model by using the supervised data to learn the outcome variables from the causal variables and the process types for each of the processes.

An information processing method according to the second aspect of the disclosure includes: generating, for each of the processes, supervised data including first causal variables that change with time, second causal variables that do not change with time, process types, and history information indicating a history of changes with time of the first causal variables; and generating a learning model by using the supervised data to learn, for each of the processes, a change with time of the first causal variables at a second time from the first causal variables, the second causal variables, and the process types at a first time in accordance with the history information.

An information processing method according to the third aspect of the disclosure includes: estimating outcome variables by using supervised data including causal variables, process types, and the outcome variables for each of a plurality of processes and inputting the causal variables and the process types into a learning model generated by learning the outcome variables from the causal variables and the process types for each of the processes; and outputting a result of the estimation.

An information processing method according to the fourth aspect of the disclosure includes: estimating a change with time of first causal variables obtained from a combination of two or more processes selected from a plurality of processes during a certain time period, by using a learning model generated by using supervised data including history information indicating a history of change with time of the first causal variables that change with time, second causal variables that do not change with time, process types, and the first causal variables, for each of the processes, and by learning, for each of the processes, the change with time of the first causal variables at a second time from the first causal variables, the second causal variables, and the process types at a first time in accordance with the history information; and outputting a result of the estimation.

## EFFECTS OF THE INVENTION

According to one or more aspects of the present disclosure, process effects of multiple processes can be learned.

## BRIEF DESCRIPTION OF THE DRAWINGS

FIG. 1 is a graph indicating the difference in infection rate between a case in which a vaccine is administered and a case in which the vaccine is not administered, as an example of a treatment effect.
FIG. 2 is a block diagram schematically illustrating a configuration of an estimation device according to a first embodiment.

FIG. 3 is a table providing an example of a categorical variable process for treatment variables.

FIG. 4 is a schematic diagram for describing an overview of a learning model according to the first embodiment.

FIG. 5 is a schematic diagram for explaining an overview of a multitask Gaussian process.

FIG. 6 is a table providing an example of a list of parameters, initial values, and the number of parameters according to the first embodiment.

FIG. 7 is a block diagram illustrating a hardware configuration example.

FIG. 8 is a flowchart illustrating the process operation of the estimation device according to the first embodiment.

FIG. 9 is a graph illustrating the difference in infection rate between a case in which multiple doses of a vaccine are administered and a case in which the vaccine is not administered, as an example of treatment effects at multiple time points.

FIG. 10 is a block diagram schematically illustrating a configuration of an estimation device according to a second embodiment.

FIGS. 11A to 11D are schematic diagrams illustrating the characteristics of the estimation device according to the second embodiment.

FIGS. 12A and 12B are schematic diagrams for describing an overview of a learning model according to the second embodiment.

FIG. 13 is a schematic diagram for explaining an overview of a deep multitask Gaussian process.

FIG. 14 is a schematic diagram for explaining input and output of a deep multitask Gaussian process unit.

FIG. 15 is a flowchart illustrating the process operation of an encoder unit in estimation of individual treatment effects at multiple time points in the second embodiment.

FIG. 16 is a flowchart illustrating the processing operation of a decoder unit in estimation of individual treatment effects at multiple time points in the second embodiment.

## MODE FOR CARRYING OUT THE INVENTION

### FIRST EMBODIMENT

The first embodiment describes an example of estimating an individual process effect at a single time point by using a multitask Gaussian process.

Here, as an example of an individual process effect, an individual treatment effect (ITE) at a single time point is estimated.

In the following, treatment is an example of a process, and treatment dosage is an example of process quantity.

The individual treatment effect is defined as the difference between the result of treating an individual and the result of not treating the individual.

The magnitude of the treatment effect changes depending on the type and dosage of the treatment, and the attributes of the individual to be treated.

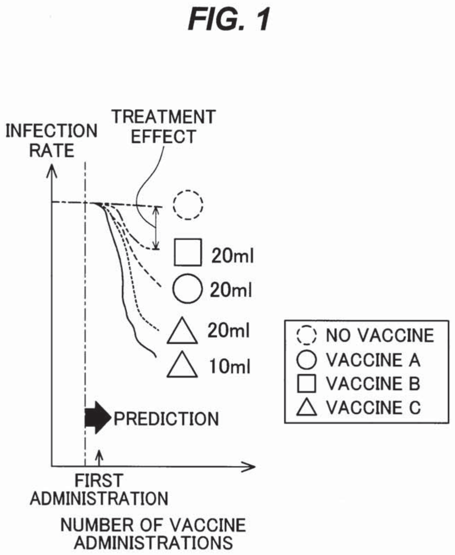

For example, as illustrated in FIG. 1, the difference in infection rate between a case in which a vaccine is administered and a case in which the vaccine is not administered represents a treatment effect. This treatment effect is thought to differ depending on target attributes (e.g., gender, age, and chronic illness) of the individual to be vaccinated, the type of vaccine, the vaccine dose, and the environment at the time of vaccination.

The disclosure is not limited to individual treatment effects, but by aggregating individual target attributes to group attributes, it is also possible to calculate the average treatment effect (ATE) for each group.

Similarly, the disclosure may be applied to a conditional average treatment effect (CATE) or a local average treatment effect (LATE).

Furthermore, the term "individual" in "individual treatment effect" can also be referred to as "target-specific" or "individualized," and the term "treatment" can be alternatively expressed as "intervention," "therapy," "action," or "exposure."

Furthermore, the term "treatment effect" may be expressed as "causal effect."

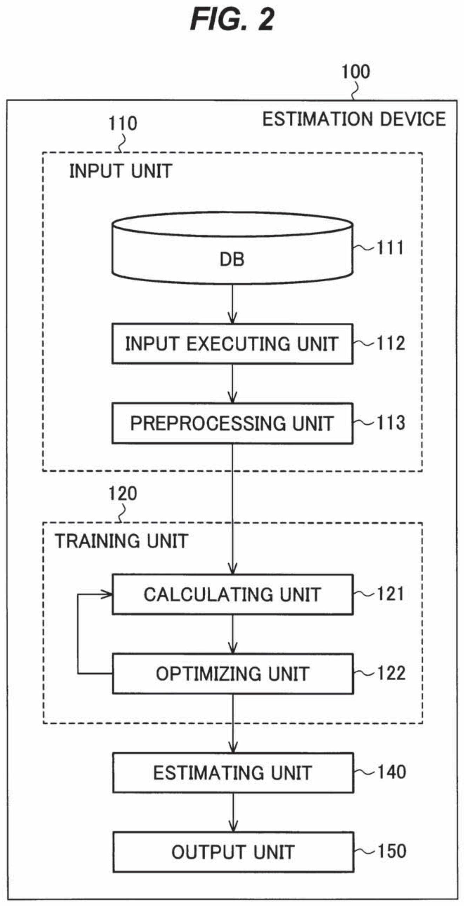

FIG. 2 is a block diagram schematically illustrating a configuration of an estimation device 100 serving as an information processing device according to the first embodiment.

The estimation device 100 includes an input unit 110, a training unit 120, an estimating unit 140, and an output unit 150.

The input unit 110 inputs supervised data to the training unit 120.

For example, in multiple processes, the input unit 110 generates supervised data including causal variables, processing types, and outcome variables for each of the processes.

The input unit 110 includes a data base (DB) 111 serving as a data storage unit, an input executing unit 112, and a preprocessing unit 113.

The DB 111 stores data necessary for a process in the estimation device 100. Here, the DB 111 stores at least causal variables X#, treatment types W#, and outcome variables Y#.

The input executing unit 112 acquires the causal variables X#, the treatment types W#, and the outcome variables Y# from the DB 111 and gives these to the preprocessing unit 113.

The causal variables X#, the treatment types W#, and the outcome variables Y# are data observed for the respective individuals i and are expressed by formula (1) below.

$$\{X\#, W\#, Y\#\} = \left\{X^i, W^i, Y^i\right\}_{i=1}^{N} \qquad (1)$$

$X^i$ represents a set J1 of causal variables, as expressed by formula (2) below. Q indicates the number of causal variables.

$$J1 = \left\{x_1^i, x_2^i, x_3^i, \cdots, x_Q^i\right\} \qquad (2)$$

As expressed in formula (3) below, each element of a causal variable may be multidimensional information, and the dimensional number of each element may be different.

$$x_q^i \in \mathbb{R}^{d_q} \qquad (3)$$

A causal variable $x_q$ is expressed by formulas (4) to (7) below.

$$\text{Features of treatment target} = x_q^{covariate} \qquad (4)$$

$$\text{Treatment dosage} = x_q^{dosage} \qquad (5)$$

$$\text{Treatment history information} = x_q^{history} \qquad (6)$$

$$\text{Environmental information at time of treatment} = x_q^{environmet} \qquad (7)$$

Here, the features of a treatment target are, for example, gender, age, body weight, etc.

The treatment dosage is, for example, a vaccine dose.

Treatment history information refers to, for example, the type and number of vaccines administered in the past, and their respective effects.

The environmental information at the time of treatment is factors affecting the treatment effect. The environmental information at the time of treatment is, for example, weather, region, economy, etc.

The treatment type W# is a categorical variable representing the type of treatment, as expressed by formula (8) below. For example, a categorical variable is the type of vaccine.

$$W\# \in \mathbb{R}^D \qquad (8)$$

The outcome variable Y# represents the treatment effect. For example, the treatment effect is a reduction in infection rates due to vaccination.

The preprocessing unit 113 performs preprocessing described later on the causal variable X#, the treatment type W#, and the outcome variable Y# from the input executing unit 112 and gives a causal variable X, a treatment type W, and an outcome variable Y resulting from the preprocessing to the training unit 120.

When there is a missing value in at least one of the treatment type W# and the outcome variable Y#, the preprocessing unit 113 removes the missing data $\{X^i, W^i, Y^i\}$.

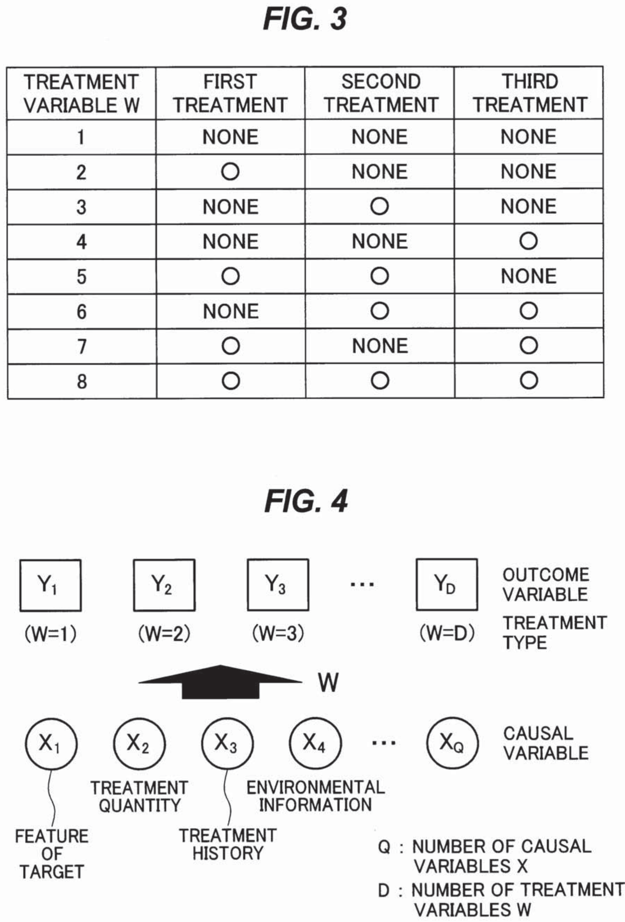

As illustrated in FIG. 3, the preprocessing unit 113, with regard to the treatment type W#, assigns integer values (1, ..., D) to the respective patterns when there are multiple observed combination patterns related to the treatment. here, D is the number of patterns.

When there is a missing value in the element $x_q$ of the causal variable X#, the preprocessing unit 113 fills the missing value with the average value of each dimension of $x_q$.

The preprocessing unit 113 normalizes the element $x_q$ of the causal variable X# so that each dimension has an average of 0 and a variance of 1.

The training unit 120 trains a learning model by using supervised data given from the input unit 110.

For example, the training unit 120 uses the supervised data from the input unit 110 to generate a learning model by learning outcome variables from causal variables and processing types for each of multiple processes. The generated learning model is stored in a storage unit not illustrated.

The training unit 120 includes a calculating unit 121 and an optimizing unit 122.

The calculating unit 121 initializes the parameter $\theta$ of a Gaussian process, inputs the causal variable X, calculates the variance covariance matrix K(X, X') of the Gaussian process, and outputs the variance covariance matrix K to the optimizing unit 122.

FIG. 4 is a schematic diagram for describing an overview of the learning model trained by the training unit 120.

A correlation between series of observed variables in a learning model can be expressed by linear correlation of a known linear model of coregionalization (LMC) kernel of a multitask Gaussian process (MTGP).

MTGP is described in detail in Reference 1 below.

A method of calculating the variance covariance matrix of an LMC kernel in the present embodiment will now be explained.

The treatment effect Y expressed by formula (9) below is expressed by formulas (10) and (11) using the LMC.

$$Y = \{y_d\}_{d=1}^{D} \qquad (9)$$

$$f_d(X) = \sum_{q=1}^{Q} a_{d,q} g_q(x_q) \qquad (10)$$

$$y_d \sim \mathcal{N}(f_d(X), \sigma_d^2) \qquad (11)$$

where, $a_{d,q}$ is a linear correlation coefficient from a state function $g_q$ to an observation function $f_d$, and $\sigma$ d2 is the variance of observation error.

In formula (10), $g_q(x_q)$ represents a function of the Gaussian process $gp(\mu(x_q), k_q(x_q, x_q'))$ generated from the element $x_q$ of the causal variable.

Although $\mu(x_q)$ represents an average matrix of $x_q$, since $x_q$ is normalized by the preprocessing unit 113, $\mu(x_q)=0$.

Here, $k_q$ represents a positive definite kernel. As the positive definite kernel to be used, one suitable for data such as a radial basis function (RBF) kernel can be selected. For example, an RBF kernel is expressed by formula (12) below.

Here, $l^1_q$ and $l^2_q$ are RBF kernel parameters.

$$k_q(x_q, x_q') = l_q^1 exp\left\{-\frac{\left\|x_q - x_q'\right\|^2}{2l_q^{2^2}}\right\} \qquad (12)$$

When the function f expressed by formula (13) below follows a Gaussian process, the function f is represented by a multidimensional Gaussian distribution like formula (14) below.

$$f = \{f_d\}_{d=1}^{D} \qquad (13)$$

$$f(X) \sim \mathcal{N}(\mu(X), K(X,X')) = \mathcal{N}(0, K(X,X')) \qquad (14)$$

where K(X,X') and (K(X,X'))$_{d,d'}$ are expressed by formulas (15) and (16) below.

$$K(X,X') \in \mathbb{R}^{DN \times DN} \qquad (15)$$

$$\left(K(X,X')\right)_{d,d'} = cov[f_d(X), f_{d'}(X')] \qquad (16)$$

K(X,X') in formula (14) is a variance covariance matrix or a Gram matrix and is a matrix representing the degree of similarity between the causal variables X and X'.

The value $\mu(X)$ represents the average matrix of the causal variable X, but since the causal variable X is normalized by the preprocessing unit 113, $\mu(X)=0$.

Each component $(K(X,X'))_{d,d'}$ of the variance covariance matrix $K(X,X')$ can be calculated as expressed in formula (17) below by using $f_d(X)$ of formula (10).

Note that the transformation from the second line to the third line in formula (17) takes advantage of the fact that the different causal variables ($q \neq q'$) are independent between them, as expressed in formula (18) below.

$$
\begin{aligned}
\left(K(X,X')\right)_{d,d'} &= cov[f_d(X), f_{d'}(X')] \\
&= \Sigma_{q=1}^{Q} \Sigma_{q'=1}^{Q} a_{d,q} a_{d',q'} \, cov[g_q(x_q), g_{q'}(x'_{q'})] \\
&= \Sigma_{q=1}^{Q} a_{d,q} a_{d',q} cov[g_q(x_q), g_q(x'_{q'})] \\
&= \Sigma_{q=1}^{Q} a_{d,q} a_{d',q} k_q(x_q, x'_q) \qquad (17)
\end{aligned}
$$

$$
cov[g_q(x_q), g_{q'}(x'_{q'})] = 0 \qquad (18)
$$

$K(X,X')$ is expressed as formulas (19) and (20) below.

$$
K(X,X') = \Sigma_{q=1}^{Q} B_q \oplus k_q(x_q, x'_q) \in \mathbb{R}^{DN \times DN} \qquad (19)
$$

$$
B_q = \begin{bmatrix}
a_{1,q}^2 & a_{1,q} a_{2,q} & \cdots & a_{1,q} a_{D,q} \\
a_{1,q} a_{2,q} & a_{2,q}^2 & \cdots & a_{2,q} a_{D,q} \\
\vdots & \vdots & \ddots & \vdots \\
a_{1,q} a_{D,q} & a_{2,q} a_{D,q} & \cdots & a_{D,q}^2
\end{bmatrix} \qquad (20)
$$

where $B_q$ satisfies formula (21) below. $B_q$ is a coregionalization matrix and represents a linear transformation from the state function $g_q$ to the observation function $f_d$.

$$
B_q \in \mathbb{R}^{D \times D} \qquad (21)
$$

The outcome variable Y is defined as expressed in formulas (22), (23), and (24) below by using the observation function f.

$$
Y \sim \mathcal{N}(f(X), \Sigma \oplus I) = \mathcal{N}(0, K(X,X') + \Sigma \oplus I) = \mathcal{N}(0, K'(X,X')) \qquad (22)
$$

$$
K'(X,X') = K(X,X') + \Sigma \oplus I \qquad (23)
$$

$$
\Sigma = \begin{bmatrix}
\sigma_1^2 & 0 & \cdots & 0 \\
0 & \sigma_2^2 & \cdots & 0 \\
\vdots & \vdots & \ddots & 0 \\
0 & 0 & 0 & \sigma_d^2
\end{bmatrix} \in \mathbb{R}^{D \times D} \qquad (24)
$$

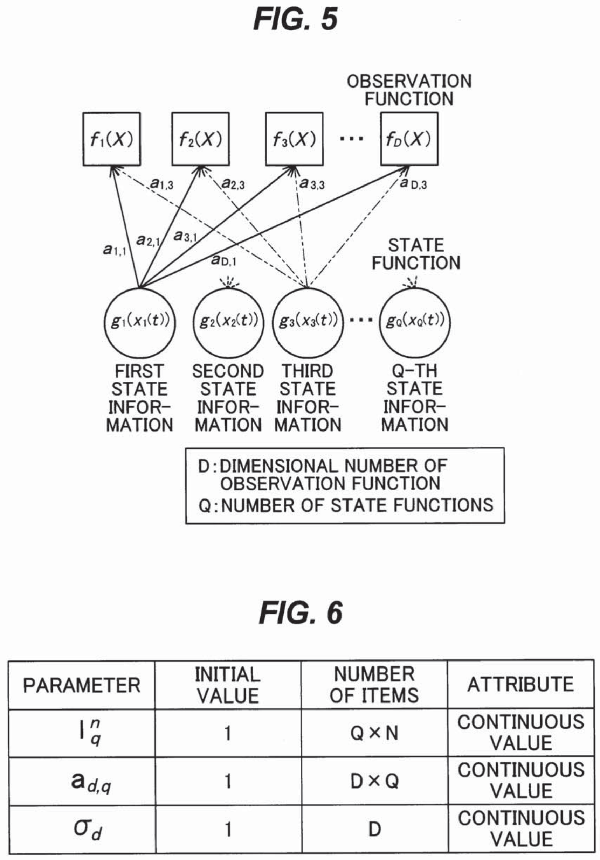

$K'(X,X')$ can be calculated by using the causal variable X and the parameter $\theta$ expressed by formula (25) below. The initial value of the parameter $\theta$ is illustrated in FIG. 6. These parameters are optimized by the optimizing unit 122 of the training unit 120.

$$
\theta = \{l_q^n, a_{d,q}, \sigma_d\} \qquad (25)
$$

The optimizing unit 122 receives the variance covariance matrix $K'(X,X')$ calculated by the calculating unit 121, calculates peripheral likelihood, and optimizes the parameters so that peripheral likelihood is minimized.

The peripheral likelihood can be obtained through the following calculation.

The probability p(Y|X,$\theta$) that the outcome variable Y is observed can be obtained by formula (26).

$$p(Y|X,\theta) = N\big(Y|0, K'_\theta(X,X')\big) = \frac{1}{(2\pi^{N/2})}\frac{1}{|K'_\theta(X,X')|^{1/2}} exp\left(-\frac{1}{2}Y^T K'_\theta(X,X')^{-1}Y\right) \quad (26)$$

where K'$_\theta$(X,X') represents K'(X,X') calculated with the parameter $\theta$.

The logarithm of both sides of formula (26) can be taken to calculate the peripheral likelihood log$_p$(Y|X,$\theta$) by formula (27) below.

$$\log p(Y|X,\theta) = -\frac{1}{2}Y^T K'(X,X')^{-1}Y - \frac{1}{2}\log|K'(X,X')| - \frac{ND}{2}\log 2\pi \quad (27)$$

where N is the length of vector X, and D is the output dimensional number as the number of tasks in Y.

In order to optimize the parameter $\theta$, it is sufficient to maximize the peripheral likelihood log$_p$(Y|X,$\theta$). For example, in order to match a general optimization problem, it is sufficient to minimize the optimization function E as expressed in formula (28) below with both sides multiplied by minus.

$$E = -\log p(Y|X,\theta) = \frac{1}{2}Y^T\big(K'(X,X')\big)^{-1}Y + \frac{1}{2}\log|K'(X,X')| + \frac{ND}{2}\log 2\pi \quad (28)$$

The optimizing unit 122 updates the optimization function E of formula (28); in other words, $\theta$ is updated so that the peripheral likelihood -log$_p$(Y|X,$\theta$) is minimized. When $\theta$ is updated at the time of optimization, an update of K'$_\theta$(X,X') is also necessary, so the calculating unit 121 calculates K'$_\theta$(X,X').

The optimization function E can be optimized using a known technique such as stochastic gradient descent.

As described above, the optimizing unit 122 can optimize the parameter $\theta$.

The estimating unit 140 calculates the treatment effect of a new input X* by using the variance covariance matrix K'$_\theta$(X,X') calculated with the parameter $\theta$ optimized by the calculating unit 121.

The output y* of the new input X* expressed by formula (29) below is expressed by formula (30) below.

$$X^* = \big\{x_q^*\big\}_{q=1}^Q \quad (29)$$

$$y^* = \{y_d^*\}_{d=1}^D \quad (30)$$

The output y* can be calculated by using formula (31) below with the variance covariance matrix K'$_\theta$(X/X') and observation points {X, Y} through, for example, Gaussian process regression, which is a known technique.

$$y_d^*(x^*) = K_*^T K'_\theta(X,X')^{-1}Y \quad (31)$$

where K* is expressed by formula (32) below, and B$_q$[:,d] is a vector in column d of B$_q$.

$$K_* = \sum_{q=1}^Q B_q[:,d]\oplus k_q\big(x_q, x_q^*\big) \in \mathbb{R}^{DN} \quad (32)$$

Here, the treatment effect ITE when treatment is not performed (W=1) and when treatment is performed (W=T) can be calculated by formula (33) below.

$$ITE = y_t^* - y_1^* \quad (33)$$

The estimating unit 140 estimates outcome variables by inputting causal variables and processing types into the learning model. With the estimated outcome variables, the estimating unit 140 can specify an optimal combination of a causal variable and a processing type.

For example, the estimating unit 140 calculates the treatment effect ITE for all combinations of treatment and treatment dosage and specifies the combination of a treatment T having the highest treatment effect and treatment dosage.

The output unit 150 outputs the result of the estimation performed by the estimating unit 140.

For example, the output unit 150 outputs a treatment T having the highest treatment effect for a target X*, its treatment dosage, and its treatment effect ITE. For example, the output unit 150 displays them.

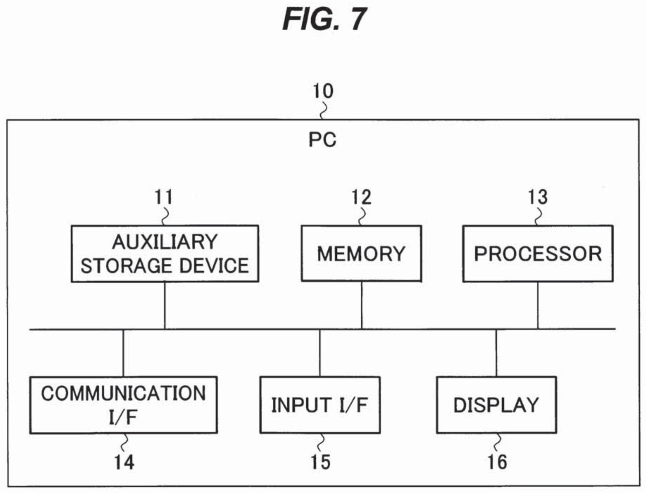

The estimation device 100 described above can be implemented by, for example, a personal computer (PC) 10, as illustrated in FIG. 7.

The PC 10 includes an auxiliary storage device 11 such as hard disk drive (HDD) or solid state drive (SSD), a memory 12, a processor 13 such as a central processing unit (CPU), a communication interface (I/F) 14 such as a network interface card (NIC), an input I/F 15 such as a keyboard and mouse, and a display 16.

For example, the DB 111 can be implemented by the auxiliary storage device 11.

The input executing unit 112, the preprocessing unit 113, the calculating unit 121, the optimizing unit 122, and the estimating unit 140 can be implemented by the processor 13 loading a program stored in the auxiliary storage device 11 onto the memory 12 and executing the program.

The output unit 150 can be implemented by the display 16.

The program may be downloaded to the auxiliary storage device 11 from a recording medium (not illustrated) via a reader/writer (not illustrated) or through a network via a communication I/F 14, then loaded onto the memory 12, and executed by the processor 13. Alternatively, the program may be directly loaded onto the memory 12 from a recording medium via a reader/writer or through a network via the communication I/F 14, and executed by the processor 13.

In other words, a program may be provided as a program product such as a recording medium.

A storage unit (not illustrated) that stores a learning model can also be implemented by the auxiliary storage device 11.

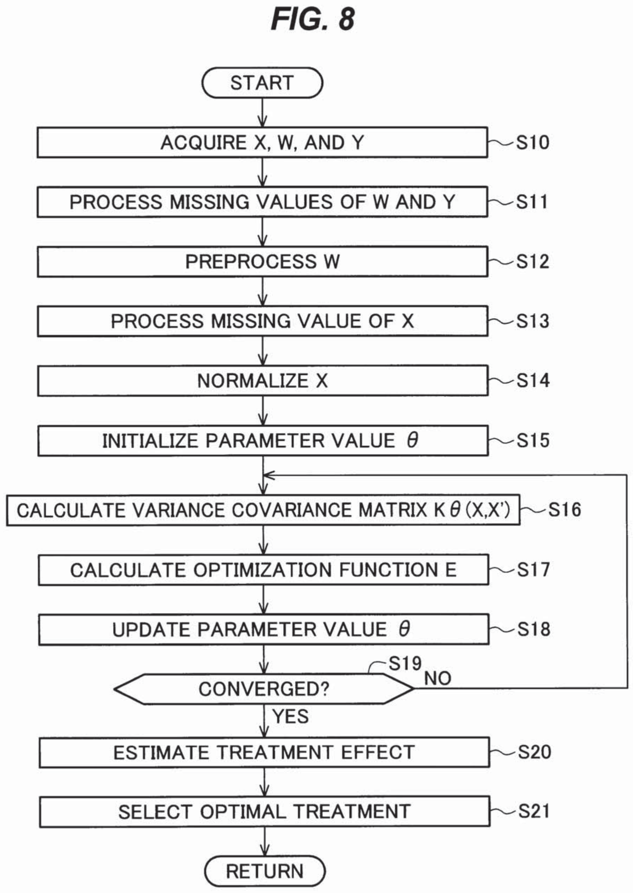

FIG. 8 is a flowchart illustrating operation of the estimation device 100 according to the first embodiment.

First, the input executing unit 112 acquires the causal variable X#, the treatment type W#, and the outcome variable Y# from the DB 111 (step S10).

Next, the preprocessing unit 113 deletes missing data from the treatment type W# and the outcome variable Y# (step S11).

Next, the preprocessing unit 113 performs preprocessing of the treatment type W# (step S12).

Next, the preprocessing unit 113 processes the missing value of the causal variable X# (step S13).

Next, the preprocessing unit 113 normalizes the causal variable X# (step S14).

According to the above steps S11 to S14, preprocessing is performed on the causal variable X#, the treatment type W#, and the outcome variable Y#, to obtain the causal variable X, the treatment type W, and the outcome variable Y, respectively.

Next, the calculating unit 121 sets the parameter $\theta$ expressed by formula (25) above to an initial value (step S15).

Next, the calculating unit 121 uses X and $\theta$ to calculate $K_\theta (X,X')$ from the formula (19) above (step S16).

Next, the optimizing unit 122 calculates the optimization function E expressed by formula (28) above (step S17).

Next, the optimizing unit 122 optimizes $\theta$ so that the optimization function E is minimized (step S18).

Next, the calculating unit 121 determines whether or not the optimization function E has converged (step S19). The condition for the optimization function E to converge is whether the value of the peripheral likelihood $-\log_p(Y|X, \theta)$ is minimized, or the process of steps S16 to S18 reaches a predetermined number of iterations.

When the optimization function E has not converged (NO in step S19), the process returns to step S16, and when the optimization function E converges (YES in step S19), the process proceeds to step S20.

In step S20, the estimating unit 140 determines the treatment effect ITE of the new input X*.

Next, the estimating unit 140 determines a combination of the treatment with the highest treatment effect ITE and the treatment dosage (step S21).

The approach described in NPL 1 can determine only the treatment effect of with or without one type of treatment, but as described above, the estimation device 100 of the first embodiment can estimate the treatment effect of multiple types of treatment.

The approach of NPL 1 takes into account only features of a treatment target, but the estimation device 100 of the first embodiment uses treatment history information and environmental information at the time of treatment as separate independent causal variables (latent variables) in addition to the features of the treatment target. By inputting each independent causal variable separately, it is better to calculate the variance covariance matrix for each as a separate latent variable, so that no spurious correlation occurs and the accuracy of the estimation is improved, rather than calculating the variance covariance matrix of a Gaussian process as one feature obtained by combining, for example, the target and treatment features, which should be independent. Here, a spurious correlation means that the correlation coefficient between variables that are not inherently correlated does not become zero even when calculated.

The individual treatment effect estimation at a single time point in the present embodiment makes it possible to determine the appropriate treatment (action) and its extent on the basis of the features of the target. For example, it becomes clear which vaccine and how much of it should be administered to reduce the infection rate the most depending on the recipient.

Also, in the first embodiment, measurement of the effect of vaccine treatment is described as an example of a treatment effect, but it is not limited to this. For example, by setting the variables as described below, the present embodiment can be applied to cancer therapy, promotion of high-priced services such as reserved train seats or high-grade hotel rooms, or boosting store sales.

The variables in the case of cancer therapy are as follows.

The feature of the processing target can be at least one of the attributes (e.g., gender, age, presence or absence of chronic illness) and physical condition information of an individual receiving the cancer therapy.

Environmental information at during the process can be a factor affecting the effect of the cancer therapy. For example, a factor affecting the effect of the cancer therapy can be information on at least one of the region and hospital in which the therapy is provided.

Processing history information can be used as treatment history for past cancer therapy. For example, therapy history for past cancer therapy is the type and number of sessions of cancer therapy received in the past, and the effect at that time.

The process type can be radiation therapy and chemotherapy.

The process quantity can be radiation intensity and anticancer drug dosage.

The process effect can be the amount of reduction in the size of the cancer.

The variables in the case of store sales promotion are as follows.

The feature of a process target can be at least one of attributes (e.g., gender, age, annual income, and preferences) and the purchase history of the purchaser of a product.

Environmental information during the process can be a factor affecting store sales. For example, a factor affecting the purchase of a product can be at least one of commodity trends, climate, and economy.

Process history information can be the purchase history during a past process. For example, the purchase history during a past process is the type, number of times, date and time of purchase, or the like of the product purchased in the past.

The process type can be a discount ticket, an internet advertisement, a television advertisement, or a travel application ticket.

The process quantity can be a discount amount, advertisement frequency, and winning probability.

The process effect can be store sales.

The variables in the case of sales promotion of a high-priced (high-value) service are as follows.

Here, a high-priced service is to provide reserved seats on railways or buses, etc., high-class seats on airplanes, etc., high-class cabins on ships, etc., reserved seats for events such as sports or entertainment, priority tickets for tourist facilities, or high-class guest rooms at hotels.

In the case of a seat or ticket, the service includes a seat guarantee, the ability to ride an attraction without queuing on the day of the visit, and priority rights such as time selection. In particular, high-priced services in railway services include, in addition to regular reserved seats, reserved seats with good views, luxurious sleeper cars, and reserved seats on planned trains.

The feature of the process target can be at least one of the attributes (e.g., gender, age, annual income, work style, place of residence, place of work, preferences, and family structure) and purchase history of the user of the service.

Environmental information during a process can be a factor affecting the sales value of a service. For example, a factor affecting the sales value of a service can be at least one of the following factors: reservation rate, congestion rate, weather, accident, sales plan, and infection status. In particular, in railway services, weather also includes disasters such as typhoons, earthquakes, and heavy rain. Accidents include vehicle breakdowns, overhead line trouble, personal injury accidents, and railway line fires. Sales plans include planned suspensions and temporary increases in the number operations due to power outages, construction, strikes, consecutive holidays, and the like.

The process history information can be action history during a past process. The action history is a history of actions taken by users of the service. For example, the action history also includes history of actions (i.e., purchase history) of users purchasing tickets, history of users applying for campaigns, history of users exercising rights, history of users using coupons, and the like.

The process type can be price increases, price reductions, campaigns, and coupon distribution.

The process quantity can be a price increase amount, a price reduction amount, and a coupon amount. The price increase amount and price reduction amount may be the difference in price increase (price increase rate) and the difference in price reduction (price reduction rate), respectively.

The process effect is the sales value of high-priced (high-value) services.

Accordingly, the following describes a case in which the first embodiment is applied to a railway service.

The causal variables are at least one of attributes and purchase history of railway users, factors affecting the sales value of the railway service, action history of the railway users, fare price increases, fare price reductions, and coupon amounts to promote railway use.

The process types are fare price increases, fare price reductions, campaigns to promote railway use, and distribution of coupons to promote railway use.

The outcome variable is the sales value of a high-priced railway service.

On the basis of the obtained process effect, the first to third operations can be performed, for example, as follows.

First operation: To increase the reservation rate of reserved train seats, the price of reserved seats can be reduced during busy times for users who ride the train for extended periods of time on the basis of their travel time, and conversely, during less busy times, the price of reserved seats can be reduced for users who ride the train for short periods of time.

Second operation: A campaign can be conducted to upgrade the grade of train or airplane seats for free, to encourage customers to book higher-grade seats in the future.

Third operation: Services can be recommended on the basis of the price range that matches the characteristics of the user.

The distribution of coupons and other methods can be used to encourage the purchase of higher-priced services.

## SECOND EMBODIMENT

In the second embodiment, individual process effects at multiple time points are estimated by using a deep multitask Gaussian process. Specifically, in the second embodiment, a case in which individual process effects are estimated for when processes are performed at multiple time points.

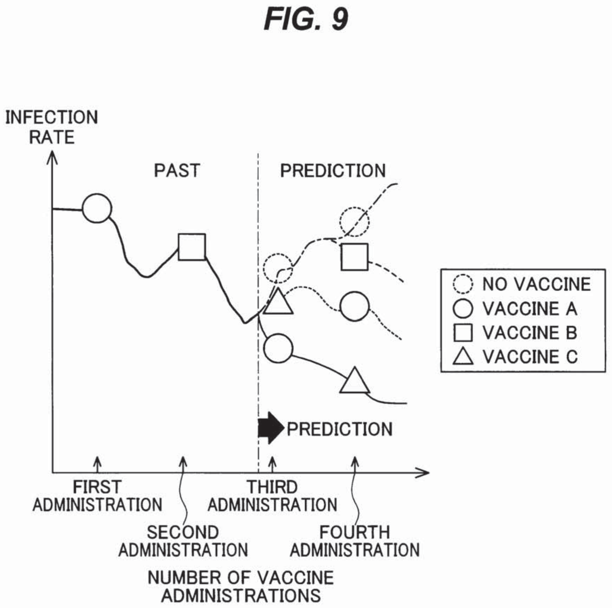

The second embodiment explains, for example, a case in which four vaccinations are planned to lower the infection rate of a virus, as illustrated in FIG. 9. Specifically, in the second embodiment, it is estimated which vaccines should be administered two more times to achieve the highest reduction in infection rate, given that the vaccine has already been administered two times and two additional administrations are planned. In a state where the vaccine has not been administered even once, the treatment effect of the next four administrations may be estimated.

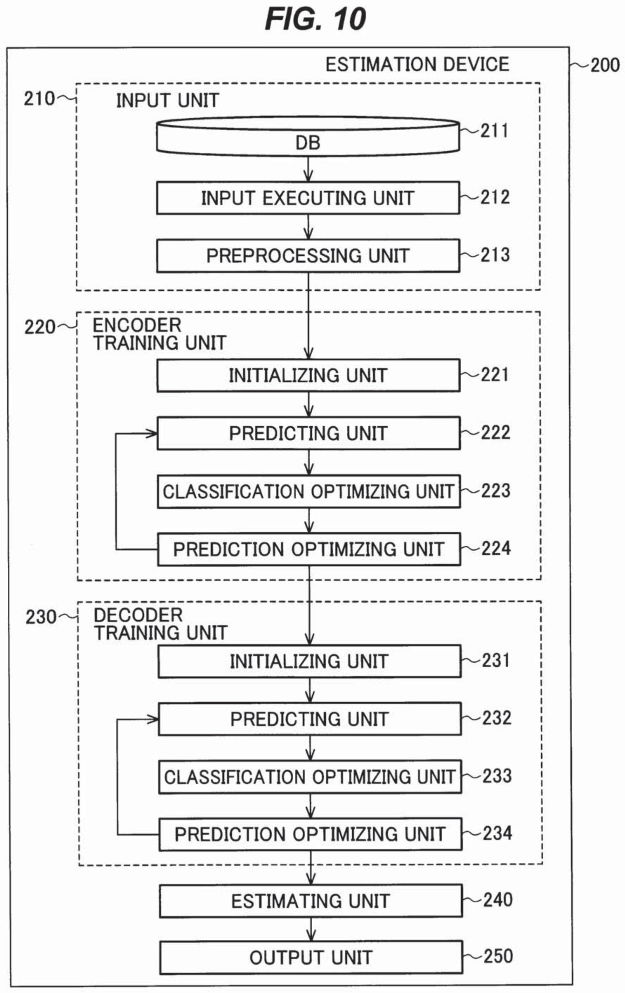

FIG. 10 is a block diagram schematically illustrating a configuration of an estimation device 200 serving as an information processing device according to the second embodiment.

The estimation device 200 includes an input unit 210, an encoder training unit 220, a decoder training unit 230, an estimating unit 240, and an output unit 250.

The input unit 210 inputs supervised data to the encoder training unit 220.

For each of the multiple processes, for example, the input unit 210 generates supervised data including a first causal variable that changes with time, a second causal variable that does not change with time, a process type, and history information indicating a history of changes in the first causal variable over time.

The input unit 110 includes a DB 211 serving as a data storage unit, an input executing unit 212, and a preprocessing unit 213.

The DB 211 stores data necessary for a process by the estimation device 200. Here, the DB 211 stores at least a feature X#, a feature V#, and a treatment type W#.

Here, the feature X# is a feature of the treatment target that fluctuates depending on the treatment, and the feature V# is a feature of the treatment target that does not fluctuate depending on the treatment.

The input executing unit 212 acquires the feature X#, the feature V#, and the treatment type W# from the DB 211 and gives these to the preprocessing unit 213.

The feature X#, the feature V#, and the treatment type W# are data observed for each individual i and are expressed by formula (34) below.

$$\{X, V, W\} = \left\{ \left\{ X_s^{(i)}, W_s^{(i)} \right\}_{s=1}^{S_{max}}, V^{(i)} \right\}_{i=1}^{N} \qquad (34)$$

where N is the number of observed data items, and $s_{max}$ represents the time length of the observed time-series data.

The preprocessing unit 213 performs preprocessing described later on the feature X#, the feature V#, and the treatment type W# from the input executing unit 212 and gives the preprocessed feature X, feature V, and treatment type W to the encoder training unit 220.

When there are missing values in the feature X#, the feature V#, and the treatment type W# of an individual i, the preprocessing unit 213 removes data J2 of the individual i expressed by the formula (35) below.

$$J2 = \left\{ \left\{ X_s^{(i)}, W_s^{(i)} \right\}_{s=1}^{S_{max}}, V^{(i)} \right\} \qquad (35)$$

The preprocessing unit 213 preprocesses the treatment type W# through the same procedure as that used by the preprocessing unit 113 in the first embodiment.

Moreover, the preprocessing unit 213 normalizes the feature X# and the feature V# so that the average is zero and the variance is one.

The encoder training unit 220 and the decoder training unit 230 function as a training unit that trains the learning model in the second embodiment.

For example, the training unit according to the second embodiment uses the supervised data from the input unit 210 to generate a learning model by learning the change with time of the first causal variable at a next time from the first causal variable, the second causal variable, and the processing type for each of the multiple processes in accordance with the history information. The trained learning model is stored in a storage unit (not illustrated).

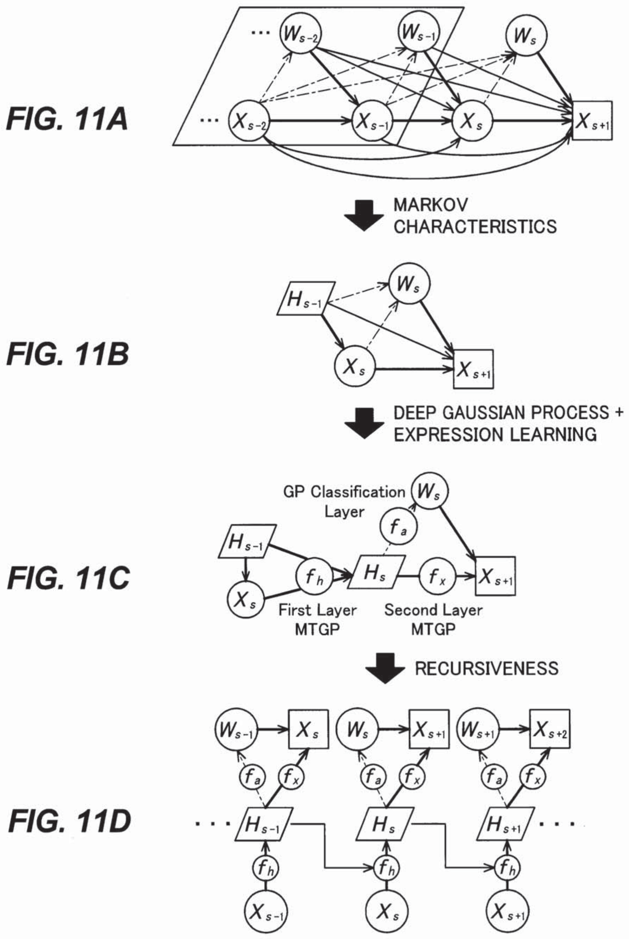

FIGS. 11A to 11D are schematic diagrams illustrating the operation concept of the learning model according to the second embodiment.

FIG. 11 illustrate causal variables X that change with time, causal variables V that do not change with time, treatment types W, and history information H.

X is a factor that changes depending on a treatment, such as infection rate, and is both a causal variable and a target variable. For example, a treatment $W_S$ is performed during step s, and when $X_s$ changes to $X_{s+1}$, $X_s$ is the causal variable, and $X_{s+1}$ is the target variable.

$X_S$, which affects both the treatment $W_S$ and the result $X_{s+1}$ after the treatment, as indicated by the one-point chain line in FIG. 11, is referred to as a confounding factor.

When there is a confounding factor, the volume of observation data of a treatment having a high treatment probability increases due to the effect of $X_S$ on $W_S$. Therefore, when training is performed with data as it is, a bias occurs in which the model is optimized for a treatment with a high probability, and when the effect of a treatment having low treatment probability is to be estimated, the prediction accuracy deteriorates; thus, it becomes difficult to estimate the correct treatment effect.

Accordingly, in the second embodiment, the effect of a confounding factor is reduced by using expression learning described in the fourth characteristic below.

First, the learning model is described.

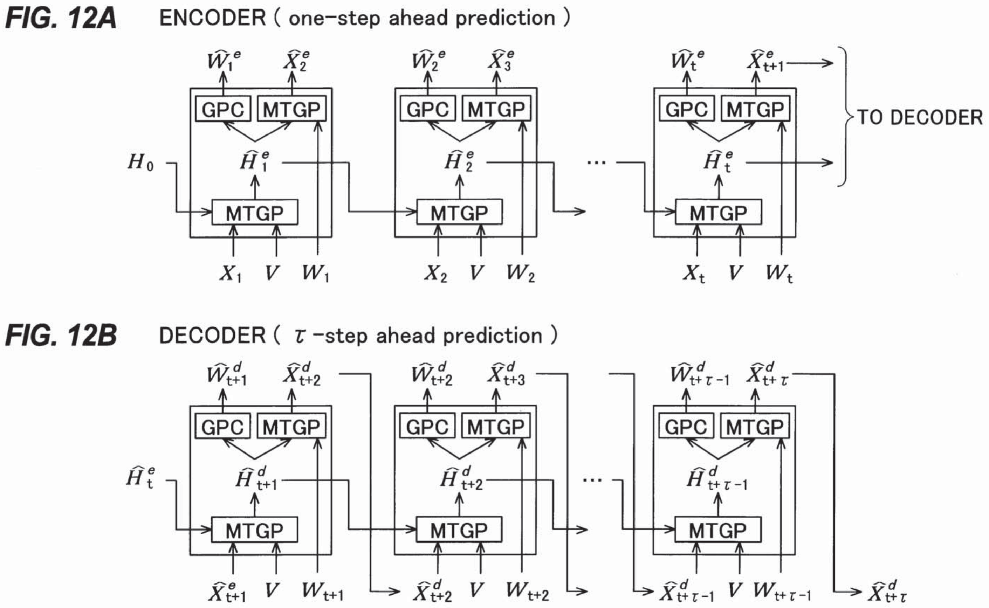

FIGS. 12A and 12B are schematic diagrams for describing the learning model according to the second embodiment.

The learning model according to the second embodiment is a combination of an encoder-decoder (or Seq2Seq) of a known technique and a deep multitask Gaussian process of a known technique.

First, the characteristics of the learning model according to the second embodiment are described.

First characteristic: When a treatment provided at multiple time points is considered, the question is how far past effects are to be considered. As illustrated in FIG. 11A, the more items of past information are included, the more complicated the causal graph becomes, and the more factors are to be considered. Therefore, in the second embodiment, for example, Markov characteristics as illustrated in FIG. 11B are introduced to simplify the learning model by using information up to the previous time as history information $H_{S-1}$.

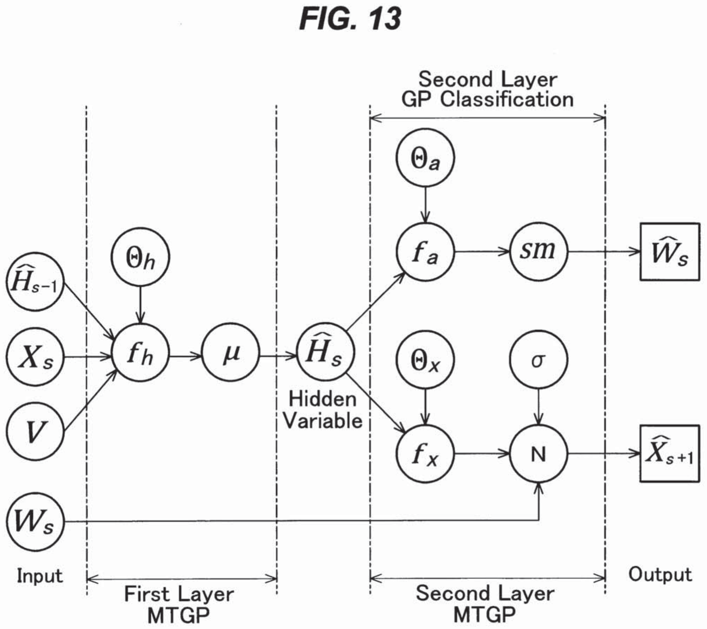

Second characteristic: As illustrated in FIGS. 11B and 13, for example, intermediate representations (hidden variables) calculated in the deep multitask Gaussian process of a known technique can be used to calculate history $H_S$.

Third characteristic: As illustrated in FIGS. 11C and 13, the second layer of the deep multitask Gaussian process is branched, where one branch predicts the causal variable J3 expressed by the formula (36) below from $H_S$ in the multitask Gaussian process, and the other branch predicts the treatment type J4 expressed by the formula (37) below from $H_S$ with a Gaussian process classification model of a known technique.

$$J3 = \hat{X}_{s+1} \qquad (36)$$

$$J4 = \widehat{W}_s \qquad (37)$$

Fourth characteristic: The influence of a confounding factor on $H_S$ to $W_S$ can be reduced by improving the prediction accuracy of the causal variable J3 expressed by formula (36) from $H_S$ through the application of an expression learning approach of a known technique, and learning $f_h$ to calculate $H_S$, which makes it difficult to predict the treatment type J4 expressed by formula (37) from $H_S$.

Fifth feature: As illustrated in FIGS. 11D and 12, long-term prediction is possible by recursively transmitting the intermediate representation $H_S$ of the deep multitask Gaussian process to the next step (s+1), and the treatment effect in any multiple treatment plans $W_{t:t+\tau}$ can be estimated.

Sixth characteristic: Since the estimation device 200 according to the second embodiment estimates the process effect of multiple processes through a deep multitask Gaussian process as described above, in addition to the effects described in the first embodiment, the reliability of the estimated process effect can also be determined.

The deep multitask Gaussian process of the second embodiment and the learning model of an encoder-decoder are explained below.

The deep multitask Gaussian process will now be explained.

Formulas (38) to (43) below express the relationships in a deep multitask Gaussian process.

Formula (38) is a Gaussian process expression in a first layer MTGP, and formula (39) is a likelihood function in the first layer MTGP.

Formula (40) is a Gaussian process expression in a second layer MTGP, and formula (41) is a likelihood function in the second layer MTGP.

Formula (42) is a Gaussian process expression in a GP classification layer, and formula (43) is a likelihood function in the GP classification layer.

$$f_h(X'_s) \sim gp\left(\mu(X'_s), K_{\theta_h}(X'_s, X'_s)\right) \qquad (38)$$

$$\hat{H}_s = mean(f_h(X'_s)) \qquad (39)$$

$$f_x(\hat{H}_s) \sim gp\left(\mu(\hat{H}_s), K_{\theta_x}(\hat{H}_s, \hat{H}_s)\right) \qquad (40)$$

$$\hat{X}_{s+1} \sim \mathcal{N}\left(f_x(\hat{H}_s) \cdot I_{tasks}(W_s), \sigma^2 I\right) \qquad (41)$$

$$f_a(\hat{H}_s) \sim gp\left(\mu(\hat{H}_s), K_{\theta_a}(\hat{H}_s, \hat{H}_s)\right) \qquad (42)$$

$$\hat{W}_s = softmax\left(f_a(\hat{H}_s)\right) \qquad (43)$$

Here, $X'_s$ is expressed by formula (44) below.

$$X'_s = \{X_s, V, H_{s-1}\} \qquad (44)$$

Due to the Gaussian process, in formulas (40) and (41), or formulas (42) and (43), the respective standard deviations J7 and J8 expressed by formulas (47) and (48) can be obtained in addition to the estimated mean values J5 and J6 expressed by formulas (45) and (46).

$$J5 = \hat{X}_{s+1} \qquad (45)$$

$$J6 = \hat{W}_s \qquad (46)$$

$$J7 = \sigma \hat{X}_{s+1} \qquad (47)$$

$$J8 = \sigma \hat{W}_s \qquad (48)$$

In formulas (38) to (43) above, f is a function of a Gaussian process, and $\mu$, sm, and N are mean functions representing a softmax function and a Gaussian distribution. Here, $\theta$ denotes a Gaussian process parameter, and $\sigma$ denotes a dispersion value of the Gaussian distribution. None of the parameters have time dependency and are the same at all times.

Each causal variable constituting $X'_s$ may also be an independent causal variable as in the first embodiment, or each causal variable (latent variable) may be divided into elements that do not change with time and elements that change with time, such as elements Xs and V expressed by formulas (49) and (50) below.

$$X_s = \left\{ x_s^{covariate}, x_s^{dosage}, x_s^{history}, x_s^{environment} \right\} \qquad (49)$$

$$V = \left\{ v^{covariate}, v^{dosage}, v^{history}, v^{environment} \right\} \qquad (50)$$

The prediction target J9 included in formula (41) above and expressed by formula (51) below may predict only a factor (for example, infection rate) that changes depending on the treatment. For example, only the factor J10 expressed by formula (52) below may be a prediction target.

$$J9 = \hat{X}_{s+1} \qquad (51)$$

$$J10 = x_s^{covariate} \qquad (52)$$

A Gaussian process will now be explained.
The matrix K1 expressed by formula (53) below represents a variance covariance matrix of a normal Gaussian process having one output.
The matrices K2 and K3 expressed by formulas (54) and (55) represent variance covariance matrices of a multitask Gaussian process.

$$K1 = K_{\theta_a} \qquad (53)$$

$$K2 = K_{\theta_h} \qquad (54)$$

$$K3 = K_{\theta_x} \qquad (55)$$

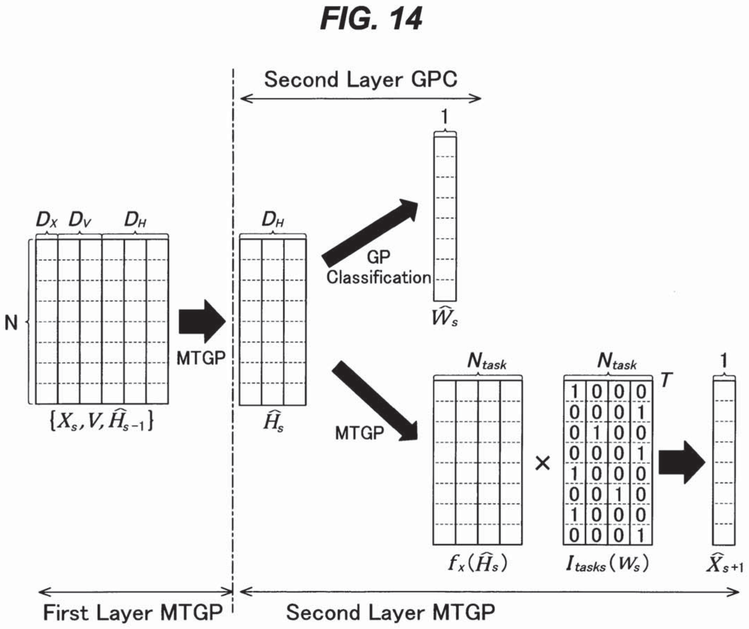

Here, as illustrated in FIG. 14, the number of output dimensional number $D_H$ of the variance covariance matrix K2 of a multitask Gaussian process expressed by formula (54) above is set to a dimensional number of one or more, and the output dimensional number $N_{task}$ of the variance covariance matrix K3 expressed by formula (55) is set to the category number of W.
The kernel for calculating the variance covariance matrices K2 and K3 expressed by formulas (54) and (55) above may be either an independent multitask kernel having no correlation between output dimensions, or a dependent multitask kernel having correlation between output dimensions. In the dependent multitask kernel, for example, an LMC kernel having linear correlation between the output dimensions may be used.
Since a computational load of $O(N^3)$ is applied when the Gaussian process is directly calculated, the computational load may be reduced by using stochastic variational inference for Gauss process (SVI-GP) using inducing points of a known technique.
A likelihood function will now be described.
The predictive distribution $f_h(X_s')$ of output from the first layer MTGP cannot be directly used as input to the second layer Gaussian process; therefore, the intermediate representation J11 expressed by formula (56) below may be calculated by determining the mean of the predictive distribution $f_h(X_t')$ of formula (39) used in a known technique of doubly stochastic variational inference for deep Gaussian processes (DSVI-DGP), or the intermediate representation J11 expressed by formula (56) below may be acquired by sampling the predictive distribution $f_h(X_s')$.

$$J11 = \hat{H}_s \qquad (56)$$

Since only one task (e.g., process $W_s$) is observed for each input data item in the second layer MTGP, only the type treated by multiplying the output J12 of the MTGP expressed by formula (57) with an index matrix $I_{tasks}(W_s)$ in which $W_s$ has a one-hot format are output, as illustrated in FIG. 14.

$$J12 = f_x\left( \hat{H}_s \right) \qquad (57)$$

The second classification layer makes it possible to predict the treatment $W_s$ for categorical variables by making the likelihood function a softmax function, as expressed in formula (48) above.

Next, the encoder-decoder model will be described.

An intermediate representation $H_S$ of the deep multitask Gaussian process is transmitted to the next step by using an encoder-decoder of a known technique. As illustrated in FIG. 12, the encoder unit can perform one-step ahead prediction, while the decoder unit can perform multiple-step ahead prediction. The encoder-decoder model of the second embodiment is not limited to the example illustrated in FIG. 12; for example, the encoder-decoder may incorporate an attention mechanism or employ a transformer.

The structure of the deep multitask Gaussian processes of the encode unit and the decoder unit are the same, but the parameters are individually refined.

Details of the operation of each unit are described on the basis of the deep multitask Gaussian process and the encoder-decoder model which are described above.

The encoder training unit 220 in FIG. 10 trains the encoder side in the encoder-decoder model.

The encoder training unit 220 in FIG. 10 includes an initializing unit 221, a predicting unit 222, a classification optimizing unit 223, and a prediction optimizing unit 224.

The initializing unit 221 sets the dimensional number $D_H$ of H illustrated in FIG. 14 to a dimensional number of one or more.

The initializing unit 221 also initializes the parameter J13 of the deep multitask Gaussian process of the encoder expressed by formula (58) below. The value to be initialized may be, for example, one, or sampled from any Gaussian distribution.

$$J13 = \{\theta_h^e, \theta_w^e, \theta_x^e, \sigma^e\} \qquad (58)$$

As illustrated in FIG. 12A, the predicting unit 222 first inputs $H_0$, which is a zero vector, and $\{X_1, V, W_1\}$ in the first step (for example, s = 1) in the encoder and calculates the data J14 expressed by formula (59) below. Thereafter, the predicting unit 222 calculates the data J17 expressed by formula (62) below by recursively inputting the data J15 expressed by formula (60) below and the data J16 expressed by formula (61) below until step t (t is an integer of two or more).

$$J14 = \left\{\widehat{H}_1^e, \widehat{W}_1^e, \widehat{X}_2^e\right\} \qquad (59)$$

$$J15 = \{X_s, V, W_s\}_{s=1}^t \qquad (60)$$

$$J16 = \widehat{H}_s^e \qquad (61)$$

$$J17 = \left\{\widehat{H}_s^e, \widehat{W}_s^e, \widehat{X}_{s+1}^e\right\}_{s=1}^t \qquad (62)$$

Then, the predicting unit 222 calculates the data J18 expressed by formula (63) below for all individuals (i) and gives the data J18 to the classification optimizing unit 223.

$$J18 = \left\{\left\{\widehat{H}_s^{e(i)}, \widehat{W}_s^{e(i)}, \widehat{X}_{s+1}^{e(i)}\right\}_{s=1}^{S_{max}}\right\}_{i=1}^N \qquad (63)$$

The classification optimizing unit 223 uses, as input, the data J19 expressed by formula (64) below and calculated by the predicting unit 222 and calculates the data J20 expressed by formula (65) below from formulas (42) and (43) above.

$$J19 = \left\{\left\{\widehat{H}_s^{e(i)}\right\}_{s=1}^{S_{max}}\right\}_{i=1}^N \qquad (64)$$

$$J20 = \left\{\left\{\widehat{W}_s^{e(i)}\right\}_{s=1}^{S_{max}}\right\}_{i=1}^N \qquad (65)$$

Then, the classification optimizing unit 223 optimizes the parameter J21 expressed by formula (67) below by minimizing the loss function expressed by formula (66) below by using an SVI-GP of a known technique.

$$\mathcal{L}_w^e = \left\{ \left\{ -\mathcal{L}_{ELBO}\left(W_s^{(i)}, \widehat{W}_s^{e(i)}\right) \right\}_{s=1}^{Smax} \right\}_{i=1}^{N} \qquad (66)$$

$$J21 = \theta_w^e \qquad (67)$$

where, $L_{ELBO}$ represents the evidence lower bound (ELBO) of the SVI-GP loss function.

The prediction optimizing unit 224 calculates the data J24 expressed by formula (70) below by using formulas (38) and (39) above while using, as input, the data J22 expressed by formula (68) below and calculated by the predicting unit 222, and the observation data J23 expressed by formula (69) below.

$$J22 = \left\{ \left\{ \widehat{H}_s^{e(i)} \right\}_{s=1}^{Smax} \right\}_{i=1}^{N} \qquad (68)$$

$$J23 = \left\{ \{X_s, V, W_s\}_{s=1}^{Smax} \right\}_{i=1}^{N} \qquad (69)$$

$$J24 = \left\{ \left\{ \widehat{H}_{s-1}^{e'(i)} \right\}_{s=1}^{Smax} \right\}_{i=1}^{N} \qquad (70)$$

The prediction optimizing unit 224 calculates the data J26 expressed by formula (72) below from formulas (40) to (43) above by using the data J25 expressed by formula (71) below as input.

$$J25 = \left\{ \left\{ \widehat{H}_{s-1}^{e'(i)} \right\}_{s=1}^{Smax} \right\}_{i=1}^{N} \qquad (71)$$

$$J26 = \left\{ \left\{ \widehat{W}_s^{e(i)}, \widehat{X}_{s+1}^{e(i)} \right\}_{s=1}^{Smax} \right\}_{i=1}^{N} \qquad (72)$$

To reduce the influence of a confounding factor, the prediction optimizing unit 224 uses the DSVI-DGP of a known technique with the loss function expressed by formula (76) below to optimize the parameter J30 expressed by formula (77) below; this is done to increase the prediction accuracy of the treatment effect J29 expressed by formula (75) below from the information J27 expressed by formula (73) below, while ensuring that the treatment J28 expressed by formula (74) below cannot be predicted from the information J27. However, the parameter J31 expressed by formula (78) below is fixed.

$$J27 = \widehat{H}_s \qquad (73)$$

$$J28 = \widehat{W}_s \qquad (74)$$

$$J29 = \widehat{X}_{s+1} \qquad (75)$$

$$\mathcal{L}_{h,x}^e = \left\{ \left\{ -\mathcal{L}_{ELBO}\left(X_{s+1}^{(i)}, \widehat{X}_{s+1}^{e(i)}\right) \right\}_{s=1}^{Smax} \right\}_{i=1}^{N} - \alpha^e \left\{ \left\{ -\mathcal{L}_{ELBO}\left(W_s^{(i)}, \widehat{W}_s^{e(i)}\right) \right\}_{s=1}^{Smax} \right\}_{i=1}^{N} \qquad (76)$$

$$J30 = \theta_h^e, \theta_x^e, \sigma^e \qquad (77)$$

$$J31 = \theta_w^e \qquad (78)$$

where $\alpha^e$ is a ratio that takes into account the term J32 in formula (79) below.

$$J32 = \mathcal{L}_{ELBO}\left(W_s^{(i)}, \widehat{W}_s^{e(i)}\right) \qquad (79)$$

The prediction optimizing unit 224 returns to the process by the predicting unit 222 until the value J33 expressed by formula (80) below and the value J34 expressed by formula (81) below converge, and repeats the processes by the classification optimizing unit 223 and the prediction optimizing unit 224 to optimize the parameter J35 expressed by formula (82) below.

$$J33 = \mathcal{L}_w^e \qquad (80)$$

$$J34 = \mathcal{L}_{h,x}^e \qquad (81)$$

$$J35 = \{\theta_h^e, \theta_w^e, \theta_x^e, \sigma^e\} \qquad (82)$$

When the value J33 expressed in formula (80) and the value J34 expressed in formula (81) converge, the prediction optimizing unit 224 uses the optimized parameter J35 expressed by formula (82) and the parameter optimized by the predicting unit 222 and gives the data J18 calculated by formula (63) to the decoder training unit 230.
The decoder training unit 230 in FIG. 10 trains the decoder side in the encoder-decoder model.
The decoder training unit 230 in FIG. 10 includes an initializing unit 231, a predicting unit 232, a classification optimizing unit 233, and a prediction optimizing unit 234.
The initializing unit 231 initializes the parameter J36 of the decoder unit expressed by formula (83) below with the parameter J35 expressed by formula (82) and optimized by the encoder unit.

$$J36 = \left\{\theta_w^d, \theta_h^d, \theta_x^d, \sigma^d\right\} \qquad (83)$$

The predicting unit 232 executes the following process to predict ($\tau$-step ahead prediction) the variable J37 at a step that is $\tau$ steps ahead of step t and expressed by formula (84) below.

$$J37 = \hat{X}_{s+\tau} \qquad (84)$$

As illustrated in FIG. 12B, in the predicting unit 232, the decoder receives, as input, the data J38 expressed by formula (85) below and last predicted by the encoder, and observation data $\{V, W_{(t+1)}\}$, and the data J39 expressed formula (86) below is calculated.

$$J38 = \left\{\widehat{H}_t^e, \hat{X}_{t+1}^e\right\} \qquad (85)$$

$$J39 = \left\{\widehat{H}_{t+1}^d, \widehat{W}_{t+1}^d, \hat{X}_{t+2}^d\right\} \qquad (86)$$

Next, the predicting unit 232 calculates the data J42 expressed by formula (89) below by recursively inputting the data J40 expressed by formula (87) below and the predictive data J41 expressed by formula (88) below up to step t+$\tau$-1, and obtains the data J43 expressed by formula (90) below.

$$J40 = \{V, W_s\}_{s=t+2}^{t+\tau-1} \qquad (87)$$

$$J41 = \left\{\widehat{H}_{s-1}^d, \hat{X}_s^d\right\} \qquad (88)$$

$$J42 = \left\{\widehat{H}_s^d, \widehat{W}_s^d, \widehat{X}_{s+1}^d\right\}_{s=t+2}^{t+\tau-1} \qquad (89)$$

$$J43 = \widehat{X}_{t+\tau}^d \qquad (90)$$

The predicting unit 232 calculates the data J44 expressed by formula (91) below for every individual (i) and gives the data J44 to the classification optimizing unit 233. Here, $\tau_{max}$ represents the maximum number of steps to the prediction destination.

$$J44 = \left\{\left\{\left\{\widehat{H}_{s+\tau-1}^{d(i)}, \widehat{W}_{s+\tau-1}^{d}, \widehat{X}_{s+\tau}^{d}\right\}_{\tau=1}^{\tau_{max}}\right\}_{s=2}^{S_{max}-\tau_{max}}\right\}_{i=1}^{N} \qquad (91)$$

The classification optimizing unit 233 calculates the data J46 expressed by formula (93) below from formulas (42) and (43) above by using, as input, the data J45 expressed by formula (92) below and calculated by the predicting unit 232.

$$J45 = \left\{\left\{\left\{\widehat{H}_{s+\tau-1}^{d(i)}\right\}_{\tau=1}^{\tau_{max}}\right\}_{s=2}^{S_{max}-\tau_{max}}\right\}_{i=1}^{N} \qquad (92)$$

$$J46 = \left\{\left\{\left\{\widehat{W}_{s+\tau-1}^{d(i)}\right\}_{\tau=1}^{\tau_{max}}\right\}_{s=2}^{S_{max}-\tau_{max}}\right\}_{i=1}^{N} \qquad (93)$$

The classification optimizing unit 233 optimizes the parameter J47 expressed by formula (95) below by minimizing the loss function expressed by formula (94) below by using an SVI-GP of a known technique. During optimization, optimization is performed by calculating the sum of the losses of $\tau=1$ to $\tau=\tau_{max}$ and performing back propagation.

$$\mathcal{L}_w^d = \left\{\left\{\left\{-\mathcal{L}_{ELBO}\left(W_{s+\tau-1}^{(i)}, \widehat{W}_{s+\tau-1}^{d(i)}\right)\right\}_{\tau=1}^{\tau_{max}}\right\}_{s=2}^{S_{max}-\tau_{max}}\right\}_{i=1}^{N} \qquad (94)$$

$$J47 = \theta_w^d \qquad (95)$$

The prediction optimizing unit 234 uses the data J48 expressed by formula (96) below as an initial input, and recursively inputs the data J49 expressed by formula (97) below up to s=t+$\tau$-1, as illustrated in FIG. 12B, to calculate the data J50 expressed by formula (98).

$$J48 = \left\{\left\{\widehat{H}_{s-1}^{e(i)}, X_s, V, W_s\right\}_{s=2}^{S_{max}-\tau_{max}}\right\}_{i=1}^{N} \qquad (96)$$

$$J49 = \left\{\widehat{H}_{s-1}^{d(i)}, \widehat{X}_s^{d(i)}\right\} \qquad (97)$$

$$J50 = \left\{\left\{\left\{\widehat{W}_{s+\tau-1}^{d(i)}, \widehat{X}_{s+\tau}^{d(i)}\right\}_{\tau=1}^{\tau_{max}}\right\}_{s=2}^{S_{max}-\tau_{max}}\right\}_{i=1}^{N} \qquad (98)$$

Then, the prediction optimizing unit 234 uses a DSVI-DGP of a known technique to optimizes the parameter J51 expressed by formula (100) below with the loss function expressed by formula (99) below. The parameter J52 expressed by formula (101) below is fixed.

$$\mathcal{L}_{h,x}^d = \left\{ \left\{ -\mathcal{L}_{ELBO}\left( \left\{ X_{s+\tau}^{d(i)} \right\}_{\tau=1}^{\tau_{max}}, \left\{ \widehat{X}_{s+\tau}^{d(i)} \right\}_{\tau=1}^{\tau_{max}} \right) + \alpha^d \mathcal{L}_{ELBO}\left( \left\{ W_{s+\tau}^{d(i)} \right\}_{\tau=1}^{\tau_{max}}, \left\{ \widehat{W}_{s+\tau}^{d(i)} \right\}_{\tau=1}^{\tau_{max}} \right) \right\}_{s=2}^{S_{max}-\tau_{max}} \right\}_{i=1}^N$$

$$(99)$$

$$J51 = \theta_h^d, \theta_x^d, \sigma^d \qquad (100)$$

$$J52 = \theta_w^d \qquad (101)$$

where $\alpha^d$ is a ratio that takes into account the term J53 expressed by formula (102) below.

$$J53 = \mathcal{L}_{ELBO}\left( \left\{ W_{s+\tau}^{d(i)} \right\}_{\tau=1}^{\tau_{max}}, \left\{ \widehat{W}_{s+\tau}^{d(i)} \right\}_{\tau=1}^{\tau_{max}} \right) \qquad (102)$$

The prediction optimizing unit 234 returns to the process by the predicting unit 232 until the value J54 expressed by formula (103) below and the value J55 expressed by formula (104) below converge, and repeats the processes by the classification optimizing unit 233 and the prediction optimizing unit 234 to optimize the parameter J36 expressed by formula (83) above.

$$J54 = \mathcal{L}_w^d \qquad (103)$$

$$J55 = \mathcal{L}_{h,x}^d \qquad (104)$$

When the value J54 expressed by formula (103) above and the value J55 expressed by formula (104) above converge, the prediction optimizing unit 234 gives the optimized parameter J36 expressed by formula (83) above and the optimized parameter J35 of the encoder expressed by formula (82) above to the estimating unit 240.
Approaches other than those explained above may be taken to optimize the parameter J35 of the encoder training unit 220 expressed by formula (82) and the parameter J36 of the decoder training unit 230 expressed by formula (83) above.
For example, training may be performed using adversarial training of a known technique. In this case, the discriminator ($f_a$) may perform training to predict the treatment J57 expressed by formula (106) below from the intermediate representation J56 expressed by formula (105) below; and the Generator ($f_h$) may perform training so that the discriminator ($f_a$) cannot predict the treatment J57 expressed by formula (106) below from the intermediate representation J56 expressed by formula (105) below while the prediction accuracy of the treatment effect J58 expressed by formula (107) below is increased.

$$J56 = \widehat{H}_s \qquad (105)$$

$$J57 = \widehat{W}_s \qquad (106)$$

$$J58 = \widehat{X}_{s+1} \qquad (107)$$

The estimating unit 240 uses a learning model to estimate the change with time of the first causal variable obtained by combining two or more processes selected from multiples processes over a certain period of time.
In this way, the estimating unit 240 can specify an optimal combination of two or more processes in accordance with the estimated change with time.
For example, the estimating unit 240 calculates the treatment effect J60 of a treatment plan J59 expressed by formulas (108) and (109) below for a time point $\tau$ ahead of any time t and a dispersion value J61 expressed by formula (110) below, from the parameter J35 of the optimized encoder expressed by formula (82) and the parameter J36 of the optimized decoder expressed by formula (83).

$$J59 = \{W_s\}_{s=t}^{s=t+\tau-1} \qquad (108)$$

$$J60 = \{\hat{X}_{s+1}^d\}_{s=t}^{s=t+\tau-1} \qquad (109)$$

$$J61 = \{\sigma\hat{X}_{s+1}^d\}_{s=t}^{s=t+\tau-1} \qquad (110)$$

The estimating unit 240 selects the treatment plan J59 expressed by for (108) above where the final treatment effect J62 expressed by formula (111) below is the highest.

$$J62 = \hat{X}_{t+\tau}^d \qquad (111)$$

Then, the estimating unit 240 gives the output unit 250 the optimal treatment plan J59 and its treatment effect J62 expressed by formulas (108), (109), and (110) above, and the dispersion value J63 expressed by formula (112) below.

$$J63 = \sigma\hat{X}_{t+\tau}^d \qquad (112)$$

When there are many combinations of the treatment plan J59 expressed by formula (108) above, or when $\tau$ is for a long period of time, search of treatment plans may be performed by Monte Carlo sampling or reinforcement learning to learn combinations that have the highest final treatment effect.

The optimal treatment plan may be the one with a large final treatment effect J62 in the treatment plans J59 expressed by formulas (108) and (111) above, or the one with a large cumulative treatment effect J64 expressed by formula (113) below.

$$J64 = \sum_{s=t}^{s=t+\tau-1}\left(\hat{X}_{s+1}^d - \hat{X}_s^d\right) \qquad (113)$$

The estimating unit 240 may prepare a treatment plan that can obtain the target treatment effect the fastest, a treatment plan that improves the situation the most on the last day of the time period, or a continuous treatment plan that maintains the current status so as not to exceed an index situation.

The output unit 250 outputs the result estimated by the estimating unit 240.

For example, the output unit 250 outputs the treatment plan, the treatment effect, and the dispersion value from the estimating unit 240. Specifically, the output unit 250 displays the treatment plan, the treatment effect, and the dispersion value.

The estimation device 200 described above can be implemented by, for example, the PC 10 illustrated in FIG. 7.

For example, the DB 211 can be implemented by the auxiliary storage device 11.

The input executing unit 112, the preprocessing unit 113, the encoder training unit 220, the decoder training unit 230, and the estimating unit 140 can be implemented by the processor 13 loading programs stored in the auxiliary storage device 11 to the memory 12 and executing the programs.

The output unit 250 can be implemented by the display 16.

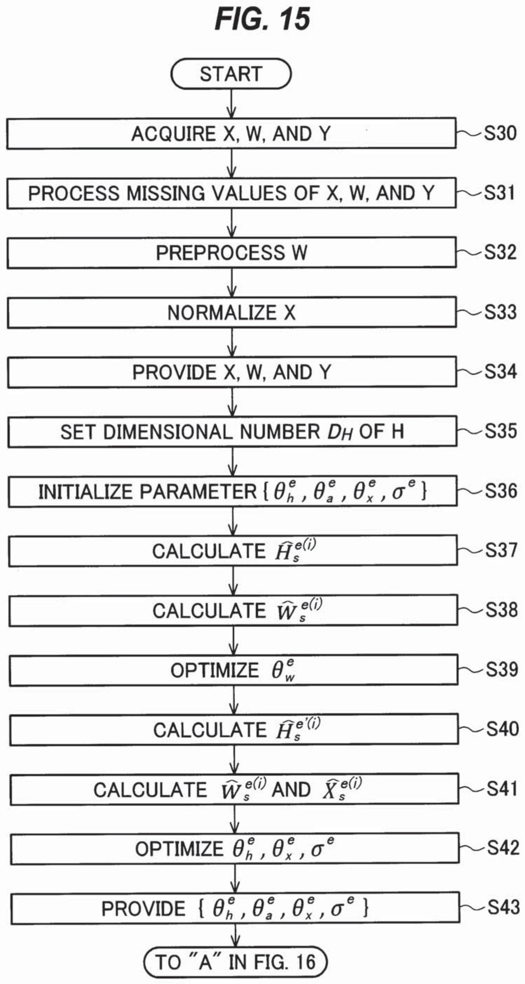

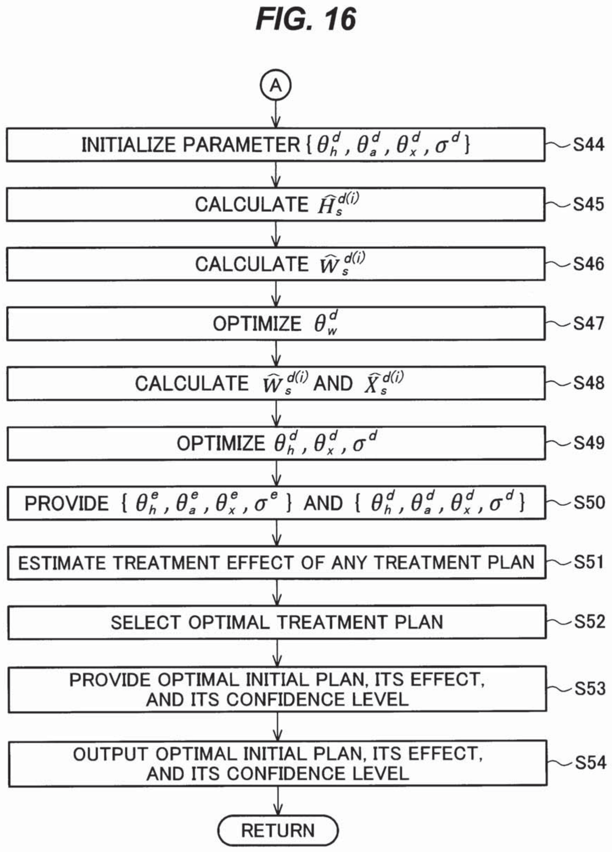

FIGS. 15 and 16 are flowcharts illustrating operation of the estimation device 200 according to the second embodiment described above.

First, the input executing unit 212 acquires {X#, V#, W#} from the DB 211 and gives them to the preprocessing unit 213 (step S30).

Next, the preprocessing unit 213 deletes data having missing values in X#, V#, and W# (step S31).

Next, the preprocessing unit 213 preprocesses W# (step S32).

Next, the preprocessing unit 213 normalizes X# (step S33).

Next, the preprocessing unit 213 gives {X, V, W} subjected to the above process to the encoder training unit 220 (step S34).

Next, the initializing unit 221 of the encoder training unit 220 sets the dimensional number $D_H$ of H (step S35).

Next, the initializing unit 221 initializes the parameter J13 expressed by formula (58) above (step S36).

Next, the predicting unit 222 calculates the data J65 expressed by formula (114) below (step S37).

$$J65 = \hat{H}_s^{e(i)} \qquad (114)$$

Next, the classification optimizing unit 223 calculates the data J66 expressed by formula (115) below (step S38).

$$J66 = \widehat{W}_s^{e(i)} \qquad (115)$$

Next, the classification optimizing unit 223 optimizes the parameter J67 expressed by formula (116) below (step S39).

$$J67 = \theta_w^e \qquad (116)$$

Next, the prediction optimizing unit 224 calculates the data J68 expressed by formula (117) below (step S40).

$$J68 = \widehat{H}_s^{e'(i)} \qquad (117)$$

Next, the prediction optimizing unit 224 calculates the data J69 and the data J70 expressed by formulas (118) and (119), respectively, below (step S41).

$$J69 = \widehat{W}_s^{e(i)} \qquad (118)$$

$$J70 = \hat{X}_s^{e(i)} \qquad (119)$$

Next, the prediction optimizing unit 234 optimizes the parameter J30 expressed by formula (77) above (step S42).
Here, the prediction optimizing unit 224 returns the process to step S37 to repeat the process until the value J33, which is a loss function and expressed by formula (80) below, and the value J34 expressed by formula (81) are minimized, or until a predetermined number of repetitions is reached.
Next, the prediction optimizing unit 234 gives the optimized parameter J35 expressed by formula (82) above to the decoder training unit 230 (step S43). The process then proceeds to step S44 in FIG. 16.
In step S44 of FIG. 16, the initializing unit 231 of the decoder training unit 230 initializes the parameter J36 of the decoder unit expressed by formula (83) above with the parameter J35 expressed by formula (82) above and optimized by the encoder unit.
Next, the predicting unit 232 calculates the data J71 expressed by formula (120) below (step S45).

$$J71 = \widehat{H}_s^{d(i)} \qquad (120)$$

Next, the classification optimizing unit 233 calculates the data J72 expressed by formula (121) below (step S46).

$$J72 = \widehat{W}_s^{d(i)} \qquad (121)$$

Next, the classification optimizing unit 233 optimizes the parameter J73 expressed by formula (122) below (step S47).

$$J73 = \theta_w^d \qquad (122)$$

Next, the prediction optimizing unit 234 calculates the data J74 and the data J75 expressed by formulas (123) and (124) below (step S48).

$$J74 = \widehat{W}_s^{d(i)} \qquad (123)$$

$$J75 = \hat{X}_s^{d(i)} \qquad (124)$$

Next, the prediction optimizing unit 234 optimizes the parameter J51 expressed by formula (100) above (step S49).

Here, the prediction optimizing unit 234 returns the process to step S45 until the value J54 expressed by formula (103) above and the value J55 expressed by formula (104) above, which are loss functions, are minimized, or until a predetermined number of repetitions is reached.

Next, the prediction optimizing unit 234 gives the estimating unit 240 the parameter J35 expressed by formula (82) above and optimized by the encoder training unit 220, and the parameter J36 expressed by formula (83) above and optimized by the decoder training unit 230 (step S50).

Next, the estimating unit 240 calculates the treatment effect J60 of a treatment plan J59 expressed by formulas (108) and (109) above for a time point $\tau$ ahead of any time point t and the dispersion value J61 expressed by formula (110) above, from the parameter J35 of the optimized encoder expressed by formula (82) and the parameter J36 of the optimized decoder expressed by formula (83) (step S51).

Next, the estimating unit 240 selects the treatment plan J59 expressed by formula (108) above where the final treatment effect J62 expressed by formula (111) above is the highest (step S52).

Next, the estimating unit 240 gives the output unit 250 the optimal treatment plan J59 expressed by formulas (108), (109), and (110), the treatment effect J62 thereof, and the dispersion value J61 thereof.

Next, the output unit 250 displays the treatment plan, the treatment effect, and the dispersion value from the estimating unit 240 (step S54).

Here, the following describes a case in which the second embodiment is applied to a railway service.

The first causal variable is the fare price increase amount, the fare price reduction amount, and the amount of coupon to promote railway use.

The second causal variables are at least one of attributes and purchase history of railway users, factors affecting the sales value of railway services, and action history of railway users.

The process types are fare price increases, fare price reductions, campaigns to promote railway use, and distribution of coupons to promote railway use.

The history information is a history of fare price increases, a history of fare price reductions, and a history of distribution of coupons to promote railways use.

As described above, according to the second embodiment, it becomes clear which action plan should be prepared at what time point in conjunction with the characteristics of the target. The confidence level of the estimated value of the treatment effect estimated through the prepared action plan can also be determined.

For example, as illustrated in FIG. 9, when four doses of vaccine are to be administered, an administration plan can be prepared for the combination of vaccines to be administered (multiple combinations of treatments), the order (sequence of treatments), the vaccination timing (timing of treatment), and the timing to stop administration (where to stop treatment).

For example, with dynamic pricing of reserved seats in railroads or rooms in hotels, for example, it will be possible to know when to raise or lower the price of the seats or rooms, the number or combination of price increases and price reductions, and the order in which to raise or lower prices, in order to achieve higher final sales.

Reference 1: Bica, I., Alaa, A. M., Jordon, J., and van der Schaar, M., "Estimating Counterfactual Treatment Outcomes Over Time Through Adversarially Balanced Representations," International Conference on Learning Representations, 2020.

## DESCRIPTION OF REFERENCE CHARACTERS

100, 200 estimation device; 110,210 input unit; 111, 211 DB; 112, 212 input executing unit; 113, 213 preprocessing unit; 120 training unit; 121 calculating unit; 122 optimizing unit; 220 encoder training unit; 221 initializing unit; 222 predicting unit; 223 classification optimizing unit; 224 prediction optimizing unit; 230 decoder training unit; 231 initializing unit; 232 predicting unit; 233 classification optimizing unit; 234 prediction optimizing unit; 140, 240 estimating unit; 150, 250 output unit.

## Claims

1. An information processing device comprising:

    an input unit configured to generate supervised data including causal variables, processing types, and outcome variables for each of a plurality of processes; and
    a training unit configured to generate a learning model by using the supervised data to learn the outcome variables from the causal variables and the process types for each of the processes.

2. The information processing device according to claim 1, further comprising:
an estimating unit configured to estimate the outcome variables by inputting the causal variables and the process types into the learning model.

3. The information processing device according to claim 2, wherein the estimating unit specifies an optimal combination of the causal variables and the process types by the estimated outcome variables.

4. The information processing device according to any one of claims 1 to 3, wherein,

the causal variables are at least one of attributes and purchase history of railway users, a factor affecting a sales value of railway services, action history of railway users, fare price increases, fare price reductions, and coupon amounts to promote railway use,
the process types are fare price increases, fare price reductions, campaigns to promote railway use, and distribution of coupons to promote railway use, and
the outcome variables are sales values of high-priced railway services.

5. An information processing device comprising:

an input unit configured to generate, for each of the processes, supervised data including first causal variables that change with time, second causal variables that do not change with time, process types, and history information indicating a history of changes with time of the first causal variables; and
a training unit configured to generate a learning model by using the supervised data to learn, for each of the processes, a change with time of the first causal variables at a second time from the first causal variables, the second causal variables, and the process types at a first time in accordance with the history information.

6. The information processing device according to claim 5, further comprising:
an estimating unit configured to use the learning model to estimate a change with time of the first causal variables obtained by a combination of two or more processes selected from the processes at a first period.

7. The information processing device according to claim 6, wherein the estimating unit specifies an optimal combination of the two or more processes based on with the estimated change with time.

8. The information processing device according to any one of claims 5 to 7, wherein,

the first causal variables are fare price increases, fare price reductions, and amounts of coupons to promote railway use,
the second causal variables are at least one of attributes and purchase history of railway users, factors affecting the sales value of railway services, and action history of railway users,
the process types are fare price increases, fare price reductions, campaigns to promote railway use, and distribution of coupons to promote railway use, and
the history information is a history of fare price increases, a history of fare price reductions, and a history of distribution of coupons to promote railways use.

9. An information processing device comprising:

an estimating unit configured to estimate outcome variables by using supervised data including causal variables, process types, and the outcome variables for each of a plurality of processes and inputting the causal variables and the process types into a learning model generated by learning the outcome variables from the causal variables and the process types for each of the processes; and
an output unit configured to output a result of the estimation.

10. The information processing device according to claim 9, wherein,

the causal variables are at least one of attributes and purchase history of railway users, a factor affecting a sales value of railway services, action history of railway users, fare price increases, fare price reductions, and coupon amounts to promote railway use,
the process types are fare price increases, fare price reductions, campaigns to promote railway use, and distribution of coupons to promote railway use, and

the outcome variables are sales values of high-priced railway services.

11. An information processing device comprising:

an estimating unit configured to estimate a change with time of first causal variables obtained from a combination of two or more processes selected from a plurality of processes during a certain time period, by using a learning model generated by using supervised data including history information indicating a history of change with time of the first causal variables that change with time, second causal variables that do not change with time, process types, and the first causal variables, for each of the processes, and by learning, for each of the processes, the change with time of the first causal variables at a second time from the first causal variables, the second causal variables, and the process types at a first time in accordance with the history information; and
an output unit configured to output a result of the estimation.

12. The information processing device according to claim 11, wherein,

the first causal variables are fare price increase amounts, fare price reduction amounts, and amounts of coupons to promote railway use,
the second causal variables are at least one of attributes and purchase history of railway users, factors affecting the sales value of railway services, and action history of railway users,
the process types are fare price increases, fare price reductions, campaigns to promote railway use, and distribution of coupons to promote railway use, and
the history information is a history of fare price increases, a history of fare price reductions, and a history of distribution of coupons to promote railways use.

13. A program that causes a computer to function as:

an input unit configured to generate supervised data including causal variables, processing types, and outcome variables for each of a plurality of processes; and
a training unit configured to generate a learning model by using the supervised data to learn the outcome variables from the causal variables and the process types for each of the processes.

14. The program according to claim 13, wherein,

the causal variables are at least one of attributes and purchase history of railway users, a factor affecting a sales value of railway services, action history of railway users, fare price increases, fare price reductions, and coupon amounts to promote railway use,
the process types are fare price increases, fare price reductions, campaigns to promote railway use, and distribution of coupons to promote railway use, and
the outcome variables are sales values of high-priced railway services.

15. A program that causes a computer to function as:

an input unit configured to generate, for each of the processes, supervised data including first causal variables that change with time, second causal variables that do not change with time, process types, and history information indicating a history of changes with time of the first causal variables; and
a training unit configured to generate a learning model by using the supervised data to learn, for each of the processes, a change with time of the first causal variables at a second time from the first causal variables, the second causal variables, and the process types at a first time in accordance with the history information.

16. The program according to claim 15, wherein,

the first causal variables are fare price increase amounts, fare price reduction amounts, and amounts of coupons to promote railway use,
the second causal variables are at least one of attributes and purchase history of railway users, factors affecting the sales value of railway services, and action history of railway users,
the process types are fare price increases, fare price reductions, campaigns to promote railway use, and distribution of coupons to promote railway use, and
the history information is a history of fare price increases, a history of fare price reductions, and a history of distribution of coupons to promote railways use.

17. A program that causes a computer to function as:

an estimating unit configured to estimate outcome variables by using supervised data including causal variables, process types, and the outcome variables for each of a plurality of processes and inputting the causal variables and the process types into a learning model generated by learning the outcome variables from the causal variables and the process types for each of the processes; and
an output unit configured to output a result of the estimation.

18. The program according to claim 17, wherein,

the causal variables are at least one of attributes and purchase history of railway users, a factor affecting a sales value of railway services, action history of railway users, fare price increases, fare price reductions, and coupon amounts to promote railway use,
the process types are fare price increases, fare price reductions, campaigns to promote railway use, and distribution of coupons to promote railway use, and
the outcome variables are sales values of high-priced railway services.

19. A program that causes a computer to function as:

an estimating unit configured to estimate a change with time of first causal variables obtained from a combination of two or more processes selected from a plurality of processes during a certain time period, by using a learning model generated by using supervised data including history information indicating a history of change with time of the first causal variables that change with time, second causal variables that do not change with time, process types, and the first causal variables, for each of the processes, and by learning, for each of the processes, the change with time of the first causal variables at a second time from the first causal variables, the second causal variables, and the process types at a first time in accordance with the history information; and
an output unit configured to output a result of the estimation.

20. The program according to claim 19, wherein,

the first causal variables are fare price increase amounts, fare price reduction amounts, and amounts of coupons to promote railway use,
the second causal variables are at least one of attributes and purchase history of railway users, factors affecting the sales value of railway services, and action history of railway users,
the process types are fare price increases, fare price reductions, campaigns to promote railway use, and distribution of coupons to promote railway use, and
the history information is a history of fare price increases, a history of fare price reductions, and a history of distribution of coupons to promote railways use.

21. An information processing method comprising:

generating supervised data including causal variables, processing types, and outcome variables for each of a plurality of processes; and
generating a learning model by using the supervised data to learn the outcome variables from the causal variables and the process types for each of the processes.

22. The information processing method according to claim 21, wherein,

the causal variables are at least one of attributes and purchase history of railway users, a factor affecting a sales value of railway services, action history of railway users, fare price increases, fare price reductions, and coupon amounts to promote railway use,
the process types are fare price increases, fare price reductions, campaigns to promote railway use, and distribution of coupons to promote railway use, and
the outcome variables are sales values of high-priced railway services.

23. An information processing method comprising:

generating, for each of the processes, supervised data including first causal variables that change with time, second causal variables that do not change with time, process types, and history information indicating a history of changes with time of the first causal variables; and

generating a learning model by using the supervised data to learn, for each of the processes, a change with time of the first causal variables at a second time from the first causal variables, the second causal variables, and the process types at a first time in accordance with the history information.

24. The information processing method according to claim 23, wherein,

the first causal variables are fare price increase amounts, fare price reduction amounts, and amounts of coupons to promote railway use,

the second causal variables are at least one of attributes and purchase history of railway users, factors affecting the sales value of railway services, and action history of railway users,

the process types are fare price increases, fare price reductions, campaigns to promote railway use, and distribution of coupons to promote railway use, and

the history information is a history of fare price increases, a history of fare price reductions, and a history of distribution of coupons to promote railways use.

25. An information processing method comprising:

estimating outcome variables by using supervised data including causal variables, process types, and the outcome variables for each of a plurality of processes and inputting the causal variables and the process types into a learning model generated by learning the outcome variables from the causal variables and the process types for each of the processes; and

outputting a result of the estimation.

26. The information processing method according to claim 25, wherein,

the causal variables are at least one of attributes and purchase history of railway users, a factor affecting a sales value of railway services, action history of railway users, fare price increases, fare price reductions, and coupon amounts to promote railway use,

the process types are fare price increases, fare price reductions, campaigns to promote railway use, and distribution of coupons to promote railway use, and

the outcome variables are sales values of high-priced railway services.

27. An information processing method comprising:

estimating a change with time of first causal variables obtained from a combination of two or more processes selected from a plurality of processes during a certain time period, by using a learning model generated by using supervised data including history information indicating a history of change with time of the first causal variables that change with time, second causal variables that do not change with time, process types, and the first causal variables, for each of the processes, and by learning, for each of the processes, the change with time of the first causal variables at a second time from the first causal variables, the second causal variables, and the process types at a first time in accordance with the history information; and

outputting a result of the estimation.

28. The information processing method according to claim 27, wherein,

the first causal variables are fare price increase amounts, fare price reduction amounts, and amounts of coupons to promote railway use,

the second causal variables are at least one of attributes and purchase history of railway users, factors affecting the sales value of railway services, and action history of railway users,

the process types are fare price increases, fare price reductions, campaigns to promote railway use, and distribution of coupons to promote railway use, and

the history information is a history of fare price increases, a history of fare price reductions, and a history of distribution of coupons to promote railways use.

FIG. 1

# FIG. 2

ESTIMATION DEVICE — 100

INPUT UNIT — 110

DB — 111

INPUT EXECUTING UNIT — 112

PREPROCESSING UNIT — 113

TRAINING UNIT — 120

CALCULATING UNIT — 121

OPTIMIZING UNIT — 122

ESTIMATING UNIT — 140

OUTPUT UNIT — 150

## FIG. 3

| TREATMENT VARIABLE W | FIRST TREATMENT | SECOND TREATMENT | THIRD TREATMENT |
|---|---|---|---|
| 1 | NONE | NONE | NONE |
| 2 | O | NONE | NONE |
| 3 | NONE | O | NONE |
| 4 | NONE | NONE | O |
| 5 | O | O | NONE |
| 6 | NONE | O | O |
| 7 | O | NONE | O |
| 8 | O | O | O |

## FIG. 4

| $Y_1$ | $Y_2$ | $Y_3$ | ... | $Y_D$ | OUTCOME VARIABLE |
|---|---|---|---|---|---|
| (W=1) | (W=2) | (W=3) | | (W=D) | TREATMENT TYPE |

W

$X_1$  $X_2$  $X_3$  $X_4$  ...  $X_Q$  CAUSAL VARIABLE

TREATMENT QUANTITY

ENVIRONMENTAL INFORMATION

FEATURE OF TARGET

TREATMENT HISTORY

Q : NUMBER OF CAUSAL VARIABLES X

D : NUMBER OF TREATMENT VARIABLES W

## FIG. 5

OBSERVATION
FUNCTION

$f_1(X)$  $f_2(X)$  $f_3(X)$  $\cdots$  $f_D(X)$

$a_{1,3}$  $a_{2,3}$  $a_{3,3}$  $a_{D,3}$

$a_{2,1}$  $a_{3,1}$

$a_{1,1}$  $a_{D,1}$

STATE
FUNCTION

$g_1(x_1(t))$  $g_2(x_2(t))$  $g_3(x_3(t))$  $\cdots$  $g_Q(x_Q(t))$

FIRST STATE INFOR-MATION | SECOND STATE INFOR-MATION | THIRD STATE INFOR-MATION | Q-TH STATE INFOR-MATION

D : DIMENSIONAL NUMBER OF
    OBSERVATION FUNCTION
Q : NUMBER OF STATE FUNCTIONS

## FIG. 6

| PARAMETER | INITIAL VALUE | NUMBER OF ITEMS | ATTRIBUTE |
|---|---|---|---|
| $l_q^n$ | 1 | $Q \times N$ | CONTINUOUS VALUE |
| $a_{d,q}$ | 1 | $D \times Q$ | CONTINUOUS VALUE |
| $\sigma_d$ | 1 | $D$ | CONTINUOUS VALUE |

# FIG. 7

## FIG. 8

```
                    START

              ACQUIRE X, W, AND Y          ~S10

        PROCESS MISSING VALUES OF W AND Y  ~S11

                  PREPROCESS W             ~S12

          PROCESS MISSING VALUE OF X       ~S13

                  NORMALIZE X              ~S14

         INITIALIZE PARAMETER VALUE θ      ~S15

   CALCULATE VARIANCE COVARIANCE MATRIX Kθ(X,X')  ~S16

        CALCULATE OPTIMIZATION FUNCTION E  ~S17

          UPDATE PARAMETER VALUE θ         ~S18

                                    S19
                   CONVERGED?          NO

                       YES

           ESTIMATE TREATMENT EFFECT       ~S20

           SELECT OPTIMAL TREATMENT        ~S21

                    RETURN
```

FIG. 9

# FIG. 10

ESTIMATION DEVICE ~200

210~ INPUT UNIT

DB ~211

↓

INPUT EXECUTING UNIT ~212

↓

PREPROCESSING UNIT ~213

220~ ENCODER TRAINING UNIT

INITIALIZING UNIT ~221

↓

PREDICTING UNIT ~222

↓

CLASSIFICATION OPTIMIZING UNIT ~223

↓

PREDICTION OPTIMIZING UNIT ~224

230~ DECODER TRAINING UNIT

INITIALIZING UNIT ~231

↓

PREDICTING UNIT ~232

↓

CLASSIFICATION OPTIMIZING UNIT ~233

↓

PREDICTION OPTIMIZING UNIT ~234

↓

ESTIMATING UNIT ~240

↓

OUTPUT UNIT ~250

FIG. 11A

MARKOV
CHARACTERISTICS

FIG. 11B

DEEP GAUSSIAN PROCESS +
EXPRESSION LEARNING

FIG. 11C

RECURSIVENESS

FIG. 11D

EP 4 657 356 A1

**FIG. 12A** ENCODER ( one-step ahead prediction )

**FIG. 12B** DECODER ( $\tau$-step ahead prediction )

## FIG. 13

Input — First Layer MTGP — Hidden Variable — Second Layer MTGP — Output

Second Layer GP Classification

**FIG. 14**

EP 4 657 356 A1

## FIG. 15

START

ACQUIRE X, W, AND Y — S30

PROCESS MISSING VALUES OF X, W, AND Y — S31

PREPROCESS W — S32

NORMALIZE X — S33

PROVIDE X, W, AND Y — S34

SET DIMENSIONAL NUMBER $D_H$ OF H — S35

INITIALIZE PARAMETER $\{\theta_h^e, \theta_a^e, \theta_x^e, \sigma^e\}$ — S36

CALCULATE $\hat{H}_s^{e(i)}$ — S37

CALCULATE $\hat{W}_s^{e(i)}$ — S38

OPTIMIZE $\theta_w^e$ — S39

CALCULATE $\hat{H}_s^{e'(i)}$ — S40

CALCULATE $\hat{W}_s^{e(i)}$ AND $\hat{X}_s^{e(i)}$ — S41

OPTIMIZE $\theta_h^e, \theta_x^e, \sigma^e$ — S42

PROVIDE $\{\theta_h^e, \theta_a^e, \theta_x^e, \sigma^e\}$ — S43

TO "A" IN FIG. 16

# FIG. 16

A

| | |
|---|---|
| INITIALIZE PARAMETER $\{\theta_h^d, \theta_a^d, \theta_x^d, \sigma^d\}$ | S44 |
| CALCULATE $\hat{H}_s^{d(i)}$ | S45 |
| CALCULATE $\hat{W}_s^{d(i)}$ | S46 |
| OPTIMIZE $\theta_w^d$ | S47 |
| CALCULATE $\hat{W}_s^{d(i)}$ AND $\hat{X}_s^{d(i)}$ | S48 |
| OPTIMIZE $\theta_h^d, \theta_x^d, \sigma^d$ | S49 |
| PROVIDE $\{\theta_h^e, \theta_a^e, \theta_x^e, \sigma^e\}$ AND $\{\theta_h^d, \theta_a^d, \theta_x^d, \sigma^d\}$ | S50 |
| ESTIMATE TREATMENT EFFECT OF ANY TREATMENT PLAN | S51 |
| SELECT OPTIMAL TREATMENT PLAN | S52 |
| PROVIDE OPTIMAL INITIAL PLAN, ITS EFFECT, AND ITS CONFIDENCE LEVEL | S53 |
| OUTPUT OPTIMAL INITIAL PLAN, ITS EFFECT, AND ITS CONFIDENCE LEVEL | S54 |

RETURN

## INTERNATIONAL SEARCH REPORT

| International application No. |
| --- |
| **PCT/JP2023/014533** |

### A. CLASSIFICATION OF SUBJECT MATTER

*G06Q 50/30*(2012.01)i; *G06N 20/00*(2019.01)i
FI: G06Q50/30; G06N20/00 130

According to International Patent Classification (IPC) or to both national classification and IPC

### B. FIELDS SEARCHED

Minimum documentation searched (classification system followed by classification symbols)

G06Q50/30; G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2017/056367 A1 (NEC CORPORATION) 06 April 2017 (2017-04-06) paragraphs [0019]-[0075] | 1-3, 9, 13, 17-19, 21, 25 |
| A | paragraphs [0079]-[0083] | 4-8, 10-12, 14-16, 20, 22-24, 26-28 |
| A | JP 7165834 B1 (OTSUKA PHARMACEUTICAL CO., LTD.) 04 November 2022 (2022-11-04) paragraphs [0149]-[0179] | 1-28 |
| A | JP 2020-140572 A (FUJITSU LTD.) 03 September 2020 (2020-09-03) abstract | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 May 2023** | **16 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 657 356 A1

**INTERNATIONAL SEARCH REPORT**
Information on patent family members

International application No.

**PCT/JP2023/014533**

| Patent document cited in search report | Publication date (day/month/year) | Patent family member(s) | Publication date (day/month/year) |
|---|---|---|---|
| WO 2017/056367 A1 | 06 April 2017 | US 2018/0218380 A1<br>paragraphs [0030]-[0083], [0086]-[0090] | |
| JP 7165834 B1 | 04 November 2022 | (Family: none) | |
| JP 2020-140572 A | 03 September 2020 | US 2020/0279178 A1<br>abstract<br>EP 3702977 A2<br>CN 111626760 A | |

Form PCT/ISA/210 (patent family annex) (January 2015)

42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALAA, A. M.** ; **VAN DER SCHAAR, M.** Bayesian inference of individualized treatment effects using multi-task gaussian processes. *Advances in Neural Information Processing Systems*, 2017, 3424-3432

- **BICA, I.** ; **ALAA, A. M.** ; **JORDON, J.** ; **VAN DER SCHAAR, M.** Estimating Counterfactual Treatment Outcomes Over Time Through Adversarially Balanced Representations. *International Conference on Learning Representations*, 2020